# EUROPÄISCHE PATENTSCHRIFT

(11) **EP 0 902 419 B1**
(45) Veröffentlichungstag und Bekanntmachung des Hinweises auf die Patenterteilung: **27.10.2004**
(21) Anmeldenummer: 98115374.5
(22) Anmeldetag: 14.08.1998
(51) Int. Cl.: G10L 15/08

(54) **Verfahren zur Zurückweisung unbekannter Wörter bei der Spracherkennung von Einzelworten**
Method of rejecting unknown words during isolated word speech recognition
Procédé de rejet de mots inconnus lors de la reconnaissance de parole de mots isolés

(30) Priorität: 12.09.1997 DE 19740261
(43) Veröffentlichungstag der Anmeldung: 17.03.1999
(73) Patentinhaber: SIEMENS AKTIENGESELLSCHAFT, 80333 München (DE)
(72) Erfinder: Lucioni, Gonzalo, 58454 Witten (DE); Gzara, Samit, Dipl.-Ing., Nouvelle Medina, 2063 Ben Arous (TN)

(56) Entgegenhaltungen:
- EP-A- 0 625 774
- OPPIZZI O ET AL: "A fuzzy acoustic-phonetic decoder for speech recognition" ICSLP'96: INTERNATIONAL CONFERENCE ON SPOKEN LANGUAGE PROCESSING, PHILADELPHIA, PA, USA, Bd. 4, 3. - 6. Oktober 1996, Seiten 2270-2273, XP002114022 IEEE, New York, NY, USA, ISBN: 0-7803-3555-4
- YOUNG S R: "Detecting misrecognitions and out-of-vocabulary words" ICASSP'94: IEEE INTERNATIONAL CONFERENCE ON ACOUSTICS, SPEECH, SIGNAL PROCESSING. ADELAIDE, AUSTRALIA, Bd. 2, 19. - 22. April 1994, Seiten 21-24, XP002077791 INSTITUTE OF ELECTRICAL AND ELECTRONICS ENGINEERSISBN: 0-7803-1776-9

## Beschreibung

Die Erfindung betrifft ein Verfahren zum Verarbeiten von Schallsignalen, insbesondere in einer Telekommunikationsanlage, bei dem aus einem Schallsignal mindestens ein Schalldatum erzeugt wird, das die tatsächliche Ausprägung eines vorgegebenen Merkmals des Schallsignals angibt. Aus dem Schalldatum wird dann ein Zuverlässigkeitswert ermittelt, der angibt, mit welcher Wahrscheinlichkeit dem Schallsignal ein Wort aus einem vorgegebenen Wortschatz zugeordnet werden kann. Dem Schallsignal wird nur dann ein Wort des Wortschatzes zugeordnet, wenn der Zuverlässigkeitswert in einem vorgegebenen Bereich liegt. Liegt der Zuverlässigkeitswert dagegen außerhalb des vorgegebenen Bereiches, so wird das Schallsignal als nicht zu einem Wort des Wortschatzes gehörend zurückgewiesen.

Derartige Verfahren werden eingesetzt, um ausgehend von der Größe des Zuverlässigkeitswertes fehlerhafte Zuordnungen des Schallsignals zu einem Wort des Wortschatzes zu vermeiden. Liegt der Zuverlässigkeitswert außerhalb des vorgegebenen Bereiches, so gehört das zu verarbeitende Schallsignal wahrscheinlich zu einem Fremdwort, das nicht zum Wortschatz gehört, oder zu einem Geräusch. In diesem Fall wird z.B. eine Wiederholung des Wortes angefordert, welches zur Entstehung des Schallsignals geführt hat. Ist eine Wiederholung des Wortes ausgeschlossen oder wurde das Schallsignal z.B. durch ein Geräusch wie Husten oder Klopfen erzeugt, so wird das Schallsignal einfach ignoriert. Bisher verwendete Verfahren berechnen den Zuverlässigkeitswert so, daß zu oft Fehlentscheidungen auftreten. Eine Fehlentscheidung liegt dann vor, wenn das Schallsignal zu einem Wort des Wortschatzes gehörte, jedoch zurückgewiesen wird, oder wenn ein Geräusch oder ein Fremdwort, das zu dem Schallsignal gehört, als zum Wortschatz gehörend angesehen wird.

Aus dem Artikel Pawlewski et al: "Advances in telephony-based speech recognition", BT Technology Journal, 14 (1996) January, No. 1, Ipswitch, Suffolk, GB, XP000554644 ist die Struktur eines Systems zur Spracherkennung bekannt, bei dem in einem ersten Schritt aus dem Sprachsignal Merkmale extrahiert werden. Die extrahierten Merkmale durchlaufen danach eine Filtereinheit ("noise an channel compensation"), beispielsweise zur Rauschunterdrückung und Amplitudenanpassung. Zunächst werden die extrahierten Merkmale dazu benutzt, das Modell zu "trainieren", also um Parameter für die Auswerteeinheit zu finden. Nach der Lernphase wird das System dann zur Spracherkennung eingesetzt, indem die extrahierten Merkmale nach Durchlaufen der zuvor beschriebenen Filtereinheit einem Mustervergleich zugeführt werden, der nach einer HMM (Hidden Markov Modell) arbeitet. Der Ausgabewert dieser Muster-Erkennungseinheit wird einer weiteren Stufe zugeführt (results processing), mit deren Hilfe nicht dem Wortschatz der Erkennungseinrichtung zugehörige Worte zurückgewiesen werden (oov = out of vocabulary - rejection). Dabei werden mehrere Kriterien "hart" verknüpft, etwa durch eine Schwellwert-Entscheidung.

Weiter ist aus dem Konferenzbeitrag von Reyes-Garcia et. al. - "The Use of Trapezoidal Function in a Linguistic Fuzzy Relational Neural Network for Speech Recognition", ICNN '94, Orlando, Florida, USA, 27.-29. Juni 1994, Bd. 7, Seiten 4487-4492, XP010127991 IEEE ein System zur Spracherkennung bekannt, welches auf einem konnektionistischen Modell basiert. Dabei sind Ein- und Ausgang der Anordnung durch einen ein neuronales Netz nutzenden Prozessor verbunden, der die aus dem Sprachsignal extrahierten Merkmale auswertet und daraus Phoneme bestimmt. Die Auswertung erfolgt unter Hinzuziehung linguistischer Fuzzy-Regeln.

Der Beitrag von Oppizzi et al: "A Fuzzy Acoustic-Phonetic Decoder for speech recognition" ICSLP '96, Philadelphia, PA, USA, Bd. 4, 3.-6. Oktober 1996, Seiten 2270-2273, XP002114022 IEEE, New York, NY, USA, ISBN: 0-7803-3555-4 zeigt eine mehrstufige Sprach-Decodierung. Mit Hilfe von Fuzzy-Regeln wird das Phonem bestimmt. Die Bestimmung erfolgt anhand eines trainierten Wortschatzes, wobei zuvor für jedes vorkommende Phonem ein Histogramm über die Ausprägung verschiedener Merkmale gewonnen wird. Zur Spracherkennung werden die gespeicherten Histogramme mit den Histogrammen der zu erkennenden Phoneme verglichen, wobei dieser Vergleich mit Hilfe von Fuzzy-Logik (unscharfer Logik) durchgeführt wird. Zur Bestimmung werden dabei auch Kontextregeln angewendet, die auf einer - beispielsweise jeder Nationalsprache eigenen - spektralen Charakteristik basieren.

Es ist Aufgabe der Erfindung ein einfaches Verfahren zum Verarbeiten von Schallsignalen anzugeben, das Schallsignale zurückweist, die wesentlich von bekannten Schallsignalen abweichen.

Diese Aufgabe wird durch ein Verfahren mit den Merkmalen des Patentanspruchs 1 gelöst. Vorteilhafte Weiterbildungen sind in den Unteransprüchen angegeben.

Die Erfindung geht von der Erkenntnis aus, daß eine Rückweisungsstrategie mit einer kleinen Fehlerrate erst dann vorliegt, wenn Fremdworte und Geräusche abgewiesen, Worte des Wortschatzes jedoch nicht abgewiesen werden. Für eine sichere Trennung müssen dabei eine Vielzahl von Parametern festgelegt werden, deren Einfluß auf das Rückweisungsergebnis oft nur sehr schwer empirisch ermittelt werden kann.

Beim Verfahren nach der Erfindung gibt eine erste zugehörigkeitsfunktion den Zusammenhang zwischen der tatsächlichen Ausprägung eines zur Unterscheidung geeigneten Merkmals und der Zugehörigkeit zu einer vorgegebenen ersten Ausprägung des Merkmals an. Eine weitere Zugehörigkeitsfunktion gibt den Zusammenhang zwischen der tatsächlichen Ausprägung des Merkmals und der Zugehörigkeit zu einer von der ersten Ausprägung verschiedenen zweiten Ausprägung des Merkmals an. Beim Festlegen der Zugehörigkeitsfunktionen gibt es viele Freiheitsgrade, so daß ein sehr großer Parameterbereich bei der Bestimmung des Zuverlässigkeitswertes gegeben ist. Außerdem ermöglichen die Zugehörigkeitsfunktionen eine überschaubare Festlegung der Parameter, da sie jeweils einen sehr einfachen Zusammenhang definieren.

Bei Vorgabe einer Ausprägung des Merkmals, z.B. eine mittlere Wortdauer, die sich in der Länge des Schallsignals wiederspiegelt, gibt die Zugehörigkeitsfunktion an, ob eine tatsächlich gemessene Dauer des zu verarbeitenden Schallsignals mit einer mittleren Wortdauer übereinstimmt, nur etwas übereinstimmt, von der mittleren Wortdauer abweicht oder sogar erheblich abweicht. Bei der Interpretation der Zugehörigkeitsfunktion wird somit auf üblicherweise verwendete Sprachbegriffe zurückgegriffen.

Beim Verfahren nach der Erfindung wird weiterhin zu dem Schalldatum aus der ersten Zugehörigkeitsfunktion ein erster Funktionswert und aus der zweiten Zugehörigkeitsfunktion ein zweiter Funktionswert ermittelt. Danach wird aus den beiden Funktionswerten nach vorgegebenen Verknüpfungsregeln ein Zulässigkeitswert ermittelt. Gibt es nur wenige Zugehörigkeitsfunktionen, so entstehen einfache und überschaubare Verknüpfungsregeln. Durch Veränderung der Verknüpfungsregeln werden wiederum Parameter bei der Festlegung des Zuverlässigkeitswertes auf überschaubare Art geändert. Sind die Verknüpfungsregeln dann einmal festgelegt, so erfolgt die Ermittlung des Zuverlässigkeitswertes mit den aus der Fuzzy-Technik bekannten Verfahren.

Da die Zugehörigkeitsfunktionen unabhängig von den Verknüpfungsregeln festgelegt werden können, lassen sich innerhalb eines gewissen Bereiches Fehler beim Festlegen der Verknüpfungsregeln durch eine geeignete Wahl der Zugehörigkeitsfunktion ausgleichen. Andererseits werden durch optimal gewählte Regeln auch Fehler beim Festlegen der Zugehörigkeitsfunktion ausgeglichen.

Beim Verfahren nach Erfindung wird als vorgegebenes Merkmal ein Merkmal gewählt, das mit geringem Aufwand aus dem zu verarbeitenden Schallsignal bestimmt werden kann, z.B. die Dauer dieses Signals, oder es wird ein Merkmal gewählt, das zur Zuordnung des Schallsignals zu einem Wort des Wortschatzes ohnehin benötigt wird, so daß zusätzliche Berechnungen vermieden werden.

Wird in einer Weiterbildung des Verfahrens nach der Erfindung die Dauer des Schallsignals als das vorgegebene Merkmal verwendet, so wird beim Festlegen der Zugehörigkeitsfunktionen zweckmäßig die durchschnittliche Dauer der Sprachsignale zu mindestens einem Wort des Wortschatzes berücksichtigt. Durch diese Maßnahme läßt sich die Zugehörigkeitsfunktion ohne großen experimentellen Aufwand festlegen, da die durchschnittliche Dauer des Sprachsignals einen Bezugswert zum Festlegen der Zugehörigkeitsfunktion liefert.

Die durchschnittliche Dauer der Sprachsignale kann zwischen verschiedenen Worten des Wortschatzes erheblich abweichen. Somit werden im Extremfall Zugehörigkeitsfunktionen für jedes Wort des Wortschatzes ermittelt. Auf der anderen Seite gibt es jedoch auch viele Worte des Wortschatzes, deren Sprachsignale eine etwa gleiche durchschnittliche Dauer haben. In diesem Fall werden Zugehörigkeitsfunktionen vorteilhaft nur für Gruppen von Wörtern des Wortschatzes festgelegt. Die Folge ist ein verringerter Speicheraufwand für das Speichern der Zugehörigkeitsfunktionen und ein verringerter Aufwand beim Festlegen der Zugehörigkeitsfunktionen, da vergleichsweise weniger Zugehörigkeitsfunktionen festgelegt werden müssen. Vor dem Ermitteln des Zuverlässigkeitswertes wird dann das Wort des Wortschatzes ermittelt, das wahrscheinlich zum Schallsignal gehört. Beim Ermitteln des Zuverlässigkeitswertes werden die Zuverlässigkeitsfunktionen des Wortes oder der Gruppe verwendet, zu der das ermittelte Wort gehört.

Bei einer anderen Weiterbildung des Verfahrens nach der Erfindung wird für jedes Wort des Wortschatzes durch einen Merkmalsvergleich zwischen einem jeweiligen Referenzsignal und dem zu verarbeitenden Schallsignal ein Ähnlichkeitswert ermittelt, der die Übereinstimmung des jeweiligen Referenzsignals mit dem zu verarbeitenden Schallsignal angibt. Als vorgegebenes Merkmal wird ein Verteilungsmaß verwendet, das die Abweichung der Verteilung der ermittelten Ähnlichkeitswerte von einer Gleichverteilung angibt. Das Verteilungsmaß hat für Geräusche und für Schallsignale zu Worten des Wortschatzes verschiedene Werte. Ist das zu unterscheidende Schallsignal auf ein Geräusch zurückzuführen, so besteht meist zu den Referenzsignalen des Wortschatzes durchgängig nur eine geringe Ähnlichkeit. Somit sind die Ähnlichkeitswerte annähernd gleich verteilt. Ist das zu unterscheidende Schallsignal dagegen bei der Aussprache eines Wortes des Wortschatzes erzeugt worden, so wird der Ähnlichkeitswert zu einem Referenzsignal besonders hoch sein. Sollte es noch ein ähnliches anderes Referenzsignal geben, so ist auch der Ähnlichkeitswert zu diesem Referenzsignal hoch. Die anderen Ähnlichkeitswerte werden jedoch einen vergleichsweise geringen Wert haben. Somit weicht die Verteilung der Ähnlichkeitswerte von einer Gleichverteilung ab. Das Verteilungsmaß ermöglicht letztlich eine Unterscheidung von Schallsignalen, die zu Geräuschen gehören und von Schallsignalen, die zu Worten des Wortschatzes gehören.

Der Merkmalsvergleich wird durch Einzelvergleich von vorgegebenen Merkmalen durchgeführt. Im weitesten Sinne wird als Merkmalsvergleich jedoch auch z.B. das Anwenden des bekannten Viterbi-Algorithmus angesehen, mit dessen Hilfe Referenzsignale, die mit vorgegebenen Modellen erzeugt werden, mit dem zu untersuchenden Schallsignal verglichen werden können. Dabei wird von allen Referenzsignalen dasjenige bestimmt, das vom zu verarbeitenden Schallsignal am wenigsten abweicht.

Anstelle oder neben den bekannten Merkmalen wird in einer anderen Weiterbildung der Erfindung als Merkmal ein Ähnlichkeitsmaß verwendet. Zur Bestimmung des Ähnlichkeitsmaßes wird für jedes Wort der Datenbasis ein Merkmalsvergleich zwischen einem jeweiligen Referenzsignal und dem zu verarbeitenden Schallsignal durchgeführt, bei dem die Ähnlichkeitswerte ermittelt werden. Anschließend wird der Ähnlichkeitswert, der die beste Übereinstimmung angibt auf die Zeit zwischen dem Beginn und dem Ende des zu verarbeitenden Schallsignals normiert. Dieser normierte Ähnlichkeitswert ist dann das Ähnlichkeitsmaß. Die Ähnlichkeitswerte liegen bereits vor, falls das oben erwähnte Verteilungsmaß bereits bestimmt wurde und brauchen somit nicht nochmals bestimmt werden. Andernfalls können die Ähnlichkeitswerte auch deshalb schon vorliegen, weil sie die Grundlage für die Zuordnung eines bestimmten Wortes zu dem zu verarbeitenden Schallsignal bilden. Das Ähnlichkeitsmaß ist insbesondere zur Unterscheidung zwischen Schallsignalen zu Worten des Wortschatzes und Schallsignalen zu Fremdworten geeignet, da bei einem relativ großen Ähnlichkeitsmaß davon ausgegangen werden kann, daß das zu verarbeitende Schallsignal sehr gut mit einem Referenzsignal zu einem Wort des Wortschatzes übereinstimmt. Bei Fremdworten kommt es gegebenenfalls nur zu einer annähernden Übereinstimmung und somit nicht zu einem so großen Ähnlichkeitsmaß.

Ein weiteres Merkmal zur Unterscheidung von Schallsignalen zu Worten des Wortschatzes und zu Fremdworten ist ein Differenzmaß, das in einer Weiterbildung der Erfindung als vorgegebenes Merkmal des Schallsignals verwendet wird. Bei der Berechnung des Differenzmaßes werden vorzugsweise sogenannte "Hidden-Markov"-Modelle verwendet, vgl. G. Ruske, Automatische Spracherkennung - Methoden der Klassifikation und Merkmalsextraktion, 2. Aufl., R. Oldenbourg, München 1994, Seiten 178 bis 182. Für jedes Wort wird ein Modell gebildet, das einen oder mehrere Zustände enthält, denen jeweils mindestens ein Referenzmerkmalsvektor zugeordnet ist. Mit den Modellen kann eine Referenzmerkmalsvektorfolge erzeugt werden, indem die Zustände z.B. von einem Programm durchlaufen werden. Das Modell enthält dabei auch Aussagen darüber, welcher Zustand nach einem betrachteten Zustand folgt. Die beim Durchlaufen der Zustände generierten Referenzmerkmalsvektoren werden mit einer Folge von Merkmalsvektoren verglichen, die aus dem zu verarbeitenden Schallsignal erzeugt wurden. Durch Vergleich der Folge von Merkmalsvektoren mit einer aus einem Modell generierbaren Referenzmerkmalsvektorfolge kann dann ein Ähnlichkeitswert berechnet werden.

Die Anzahl der aus einem Modell erzeugbaren Folgen von Referenzmerkmalsvektoren ist jedoch sehr groß. Außerdem hat jedes Wort des Wortschatzes sein eigenes Modell. Zur Verringerung des Rechenaufwandes ist es bekannt, z.B. den sogenannten Viterbi-Algorithmus einzusetzen, um die Referenzmerkmalsvektorfolge aus einem Modell zu bestimmen, die die größte Übereinstimmung mit der Folge von Merkmalsvektoren des zu verarbeitenden Schallsignals hat. Dadurch können die Ähnlichkeitswerte für jedes Wort des Wortschatzes auf einfache Art bestimmt werden.

Bei der Weiterbildung des Verfahrens nach der Erfindung wird zusätzlich zu den einzelnen Modellen für die Worte der Datenbasis auch ein gemeinsames Modell für alle Worte der Datenbasis verwendet. Das gemeinsame Modell hat nur einen einzigen Zustand hat, in dem zumindest ein großer Teil, vorzugsweise jedoch alle, Referenzmerkmalsvektoren enthalten sind, die in den Einzelmodellen für die Worte des Wortschatzes auftreten. Auch aus dem gemeinsamen Modell wird die Vektorfolge ermittelt, die die größte Ähnlichkeit zu der Folge von Merkmalsvektoren des zu verarbeitenden Schallsignal hat. Anschließend wird das Differenzmaß durch Bildung der Differenz zwischen dem größten Ähnlichkeitswert der Einzelmodelle und dem Ähnlichkeitswert des gemeinsamen Modells berechnet. Das auf diese Weise berechnete Differenzmaß hat für Worte, die zum Wortschatz gehören, einen sehr geringen Wert und für Fremdworte, die nicht zum bekannten Wortschatz gehören und somit nicht in Einzelmodellen hinterlegt sind, einen sehr großen Wert. Somit kann an Hand des Differenzmaßes entschieden werden, ob das zu verarbeitende Schallsignal zu einem Wort des Wortschatzes gehört oder ein Fremdwort ist.

In einer anderen Weiterbildung der Erfindung werden alle vier genannten Merkmale bei der Berechnung des Zuverlässigkeitswertes verwendet, da ein Merkmal alleine oft noch keine hinreichend genaue Unterscheidung bzw. Klassifikation des Schallsignals gestattet. In einem ersten Teilverfahren werden das Verteilungsmaß und das Wortdauermaß miteinander verknüpft, da diese beiden Merkmale zum Unterscheiden von Schallsignalen zu Geräuschen und von Schallsignalen zu Worten des Wortschatzes geeignet sind, und sich somit die Verknüpfungsregeln vergleichsweise einfach finden lassen. In einem zweiten Teilverfahren werden das Ähnlichkeitsmaß und das Differenzmaß miteinander verknüpft, da diese beiden Merkmale zum Unterscheiden von Schallsignalen zu Worten des Wortschatzes und von Schallsignalen zu Fremdworten geeignet sind. Anschließend wird aus den Ergebnissen der Einzelverknüpfungen der Zuverlässigkeitswert durch die Verknüpfung der Zwischenergebnisse nach vorgegebenen Verknüpfungsregeln erzeugt. Sämtliche Verknüpfungsregeln für dieses Vorgehen lassen sich auch deshalb vergleichsweise einfach ermitteln, weil die mit den Verknüpfungsregeln durchgeführten Schlußfolgerungen in zwei Stufen durchgeführt werden. In der ersten Stufe werden einerseits das Verteilungsmaß und das Wortdauermaß und andererseits das Ähnlichkeitsmaß und das Differenzmaß miteinander verknüpft. In der zweiten Stufe werden dann die Ergebnisse der Verknüpfungen der ersten Stufe nochmals miteinander verknüpft. Die Verknüpfungsregeln lassen sich für das zweistufige Verfahren leichter finden als für ein einstufiges Verfahren. Außerdem sind die Verknüpfungsregeln selbst bei einem zweistufigen Verfahren einfacher.

Die Erfindung betrifft in einem weiteren Aspekt eine Anlage zum Verarbeiten von Schallsignalen und insbesondere zum Durchführen des Verfahrens nach einem der vorhergehenden Ansprüche. Die oben genannten technischen Wirkungen gelten auch für die Anlage.

Im folgenden werden Ausführungsbeispiele der Erfindung unter Bezugnahme auf die Zeichnungen erläutert. Darin zeigen:
- Figur 1: ein Blockschaltbild der wesentlichen Funktionseinheiten einer Anlage zum Verarbeiten von Schallsignalen,
- Figur 2: zwei "Hidden-Markov"-Modelle für die Wörter "Hallo" und "bunt",
- Figur 3: ein gemeinsames "Hidden-Markov"-Modell für die Wörter "Hallo" und "bunt",
- Figur 4: Häufigkeitsdiagramme zum Festlegen von Zugehörigkeitsfunktionen, und
- Figur 5: eine Darstellung der mit einer vorgegebenen Rückweisungsstrategie erreichten Ergebnisse.

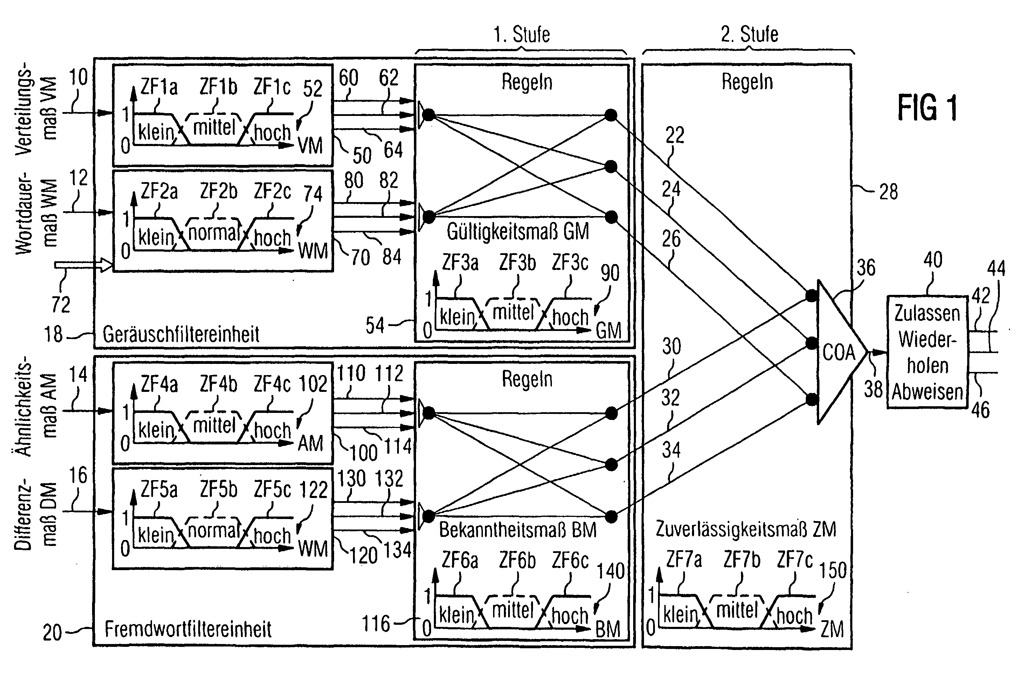

Figur 1 zeigt das Blockschaltbild der wesentlichen Funktionseinheiten einer Anlage zur Ermittlung von Schallsignalen, die den Worten eines vorgegebenen Wortschatzes zugeordnet werden können, und von Schallsignalen, die zu Geräuschen oder zu Fremdworten gehören, so daß diesen Schallsignalen kein Wort des Wortschatzes zugeordnet werden kann. In einer nicht dargestellten Vorverarbeitungseinheit wird der Signalverlauf der Spannung auf einer Telefonleitung in einer Telekommunikationsanlage zu diskreten Zeitpunkten abgetastet, quantisiert und codiert. Die Vorverarbeitungseinheit erzeugt weiterhin auf Leitungen 10 bis 16 Spannungswerte, deren Größe jeweils einem anderen Maß zur Beschreibung des Spannungsverlaufs auf der Telefonleitung entspricht. Diese Maße werden weiter unten erläutert.

Die Leitungen 10 und 12 sind mit den Eingängen einer Geräuschfiltereinheit 18 verbunden, mit der Signalverläufe erkannt werden, die durch Geräusche hervorgerufen werden, wie z.B. durch Klopfen oder durch Husten. Die Leitungen 14 und 16 sind mit den Eingängen einer Fremdwortfiltereinheit 20 verbunden. In der Fremdwortfiltereinheit 20 wird überprüft, ob ein vorgegebener Signalverlauf auf der Telefonleitung durch die Übertragung eines Wortes erzeugt wird, das zum Wortschatz gehört, oder ob der Signalverlauf durch die Übertragung eines Fremdwortes hervorgerufen wird, das nicht zum Wortschatz gehört.

Ausgangsleitungen 22 bis 26 der Geräuschfiltereinheit 18 sind mit Eingängen einer Verknüpfungseinheit 28 elektrisch verbunden. Drei Ausgänge der Fremdwortfiltereinheit 20 sind über Leitungen 30, 32 und 34 jeweils mit einem weiteren Eingang der Verknüpfungseinheit 28 verbunden. In der Verknüpfungseinheit 28 werden die Signale auf den Leitungen 22 bis 26 sowie auf den Leitungen 30 bis 34 nach vorgegebenen Regeln verknüpft. In einer Fuzzy-Ausgabeeinheit 36 wird aus den Verknüpfungsergebnissen dann ein Zuverlässigkeitswert gebildet, der auf einer Leitung 38 zu einer Ausgabeeinheit 40 übertragen wird.

Die Ausgabeeinheit 40 hat drei Ausgangsleitungen 42, 44 und 46, auf denen Ausgangssignale übertragen werden. Die Ausgabeeinheit arbeitet so, daß jeweils nur eines der Signale auf den Leitungen 42 bis 46 den Zustand EIN hat. Die beiden anderen Signale befinden sich jeweils im Zustand AUS. Hat das Ausgangssignal auf der Leitung 42 den Zustand EIN, so bedeutet dies, daß der Spannungsverlauf auf der Telefonleitung einem Wort des Wortschatzes zugeordnet werden kann. Die genaue Zuordnung wird in einer nicht dargestellten Zuordnungseinheit durchgeführt. Wenn das Ausgangssignal auf der Leitung 42 den Zustand EIN hat, wird die Weiterbearbeitung des durch die Zuordnungseinheit bestimmten Wortes zugelassen. Hat dagegen das Signal auf der Leitung 44 den Stand EIN, so bedeutet dies, daß eine Entscheidung darüber noch nicht getroffen werden kann, ob der Signalverlauf zu einem Wort des Wortschatzes oder aber zu einem Geräusch bzw. Fremdwort gehört. In diesem Fall wird durch den Zustand EIN auf der Leitung 44 eine Wiederholung des gegebenenfalls von einem Teilnehmer gesprochenen Wortes angefordert. Der Zustand EIN auf der Leitung 46 signalisiert, daß der untersuchte Signalverlauf nicht zu einem Wort des Wortschatzes gehört. Dies ist darauf zurückzuführen, daß es sich entweder um ein Geräusch oder um ein Fremdwort handelt. Hat das Signal auf der Leitung 46 den Zustand EIN, so wird die Weiterverarbeitung eines durch die Zuordnungseinheit festgelegten Wortes nicht durchgeführt. Somit kommt es zu einer Abweisung des zu untersuchenden Signalverlaufs.

Die Geräuschfiltereinheit 18 enthält eine erste Fuzzy-Eingabeeinheit 50 zum Transformieren des Signalwerts auf der Leitung 10 mit unten erläuterten Zugehörigkeitsfunktionen in drei Zugehörigkeitswerte. Die Transformation wird auch als Fuzzifizierung bezeichnet. Der auf der Leitung 10 übertragene Wert ist von einem Verteilungsmaß VM abhängig, das in der Vorverarbeitungseinheit (nicht dargestellt) berechnet wird. Das Verteilungsmaß VM wird dabei aus Größen berechnet, die bei der Zuordnung des Signalverlaufs zu einem Wort des Wortschatzes in der Zuordnungseinheit ohnehin erzeugt werden. Durch einen Merkmalsvergleich zwischen Referenzsignalen, die zu einem jeweiligen Wort des Wortschatzes gehören und dem zu verarbeitenden Spannungssignal werden Ähnlichkeitswerte ermittelt, welche die Übereinstimmung der Referenzsignale mit dem Spannungssignal auf der Telefonleitung angeben.

Anschließend wird ermittelt, ob die Ähnlichkeitswerte zu den Worten des Wortschatzes alle etwa den gleichen Wert haben, so daß die Ähnlichkeitswerte eine Gleichverteilung haben, oder ob die Größe der Ähnlichkeitswerte stark streut. In letzterem Fall weicht die Verteilung der Ähnlichkeitswerte von einer Gleichverteilung ab. Die Abweichung der Ähnlichkeitswerte von einer Gleichverteilung kann z.B. dadurch bestimmt werden, daß die Ähnlichkeitswerte ihrer Größe nach geordnet werden. Anschließend werden die Mittelwerte von Untermengen der Ähnlichkeitswerte gebildet. Dabei wird der erste Mittelwert aus den beiden größten Ähnlichkeitswerten, der zweite Mittelwert aus den drei größten Ähnlichkeitswerten usw. gebildet, bis zuletzt der Mittelwert aus allen Ähnlichkeitswerten gebildet wird. Bei einem Wortschatz von N-Worten, wobei N eine natürliche Zahl ist, erhält man somit N-1 Mittelwerte. Der Durchschnitt aller berechneten Mittelwerte ergibt dann das Verteilungsmaß VM. Die Berechnung des Verteilungsmaßes VM kann vereinfacht werden, indem nach dem Ordnen der Ähnlichkeitswerte eine gewichtete Summe über die geordneten Ähnlichkeitswerte gebildet wird. Dabei werden die Ähnlichkeitswerte der Reihe nach mit verschiedenen Wichtungsfaktoren gewichtet. Die Größe des jeweiligen Wichtungsfaktors kann fest vorgegeben werden und hängt z.B. von der Position des mit diesem Wichtungsfaktor gewichteten Ähnlichkeitswertes in der Reihe der nach ihrer Größe geordneten Ähnlichkeitswerte ab.

Zur Erläuterung der von der Fuzzy-Eingabeeinheit 50 durchgeführten Transformation wird auf ein Zugehörigkeitsfunktionen-Koordinatensystem 52 Bezug genommen, auf dessen Ordinatenachse im Bereich von Null bis Eins Funktionswerte sogenannter Zugehörigkeitsfunktionen abgetragen sind und auf dessen Abszissenachse die Größe des Verteilungsmaßes VM abgetragen ist. Das Verteilungsmaß VM wird in der Fuzzy-Technik auch als linguistische Variable bezeichnet. Im Ausführungsbeispiel hat die linguistische Variable "Verteilungsmaß VM" drei linguistische Werte, nämlich die Werte "klein" für ein kleines Verteilungsmaß VM, "mittel" für eine mittlere Größe des Verteilungsmaßes VM und "hoch" für einen großen Wert des Verteilungsmaßes VM. Zum linguistischen Wert "klein" des Verteilungsmaßes VM gehört eine Zugehörigkeitsfunktion ZF1a, deren Funktionswert mit zunehmender Größe des Verteilungsmaßes VM nach einem Bereich mit dem konstanten Funktionswert Eins linear auf den Wert Null fällt. Eine Zugehörigkeitsfunktion ZF1b für den linguistischen Wert "mittel" steigt von Null bis zum Wert Eins in dem Bereich an, in dem die Zugehörigkeitsfunktion ZF1a fällt, bleibt dann für größer werdende Werte des Verteilungsmaßes VM auf dem Wert Eins und fällt schließlich wieder linear auf den Wert Null ab. Die Funktionswerte einer Zugehörigkeitsfunktion ZF1c für den Wert "hoch" des Verteilungsmaßes steigen mit größer werdendem Verteilungsmaß VM vom Wert Null bis zum Wert Eins linear in dem Bereich an, in dem die Zugehörigkeitsfunktion ZF1b für den Wert "mittel" sinkt. Mit noch größeren Werten für das Verteilungsmaß VM bleibt der Funktionswert der Zugehörigkeitsfunktion ZF1c konstant auf dem Wert Eins.

Die Fuzzy-Eingabeeinheit 50 berechnet für jede Zugehörigkeitsfunktion ZF1a bis ZF1c den Funktionswert abhängig von der Größe des auf der Leitung 10 übertragenen Verteilungsmaßes VM. Der Funktionswert der Zugehörigkeitsfunktion ZF1a für den Wert "klein" wird auf einer Leitung 60 an die Verknüpfungseinheit 54 ausgegeben. Dieser Funktionswert liegt in der Nähe von Eins, wenn die Verteilung der Ähnlichkeitswerte stark von einer Gleichverteilung abweicht, und in der Nähe von Null, wenn zumindest eine annähernde Gleichverteilung der Ähnlichkeitswerte vorliegt. Auf einer Leitung 62 wird der Funktionswert der Zugehörigkeitsfunktion ZF1b an die Verknüpfungseinheit 54 übermittelt. Der Funktionswert der Zugehörigkeitsfunktion ZF1b hat einen Wert von ungefähr Null, wenn die Verteilung der Ähnlichkeitswerte entweder stark von einer Gleichverteilung abweicht oder im wesentlichen mit einer Gleichverteilung übereinstimmt. Für den dazwischenliegenden Bereich liegt der Funktionswert zwischen Null und Eins. Der Funktionswert der Zugehörigkeitsfunktion ZF1c wird schließlich auf einer Leitung 64 ausgegeben und an die Verknüpfungseinheit 54 übermittelt. Der Funktionswert der Zugehörigkeitsfunktion ZF1c hat für große Werte des Verteilungsmaßes VM den Wert Eins, d.h. daß in diesem Fall die Ähnlichkeitswerte im wesentlichen gleich verteilt sind. Sind die Ähnlichkeitswerte nicht gleich verteilt, so hat der Funktionswert der Zugehörigkeitsfunktion ZG1c einen Wert kleiner Eins. Die Funktionsweise der Verknüpfungseinheit 54 wird unten erläutert, nachdem die Funktionsweise einer weiteren Fuzzy-Eingabeeinheit 70 erläutert wurde.

Die Fuzzy-Eingabeeinheit 70 ist eingangsseitig mit der Leitung 12 verbunden. Auf der Leitung 12 wird ein Wortdauermaß WM in die Fuzzy-Eingabeeinheit 70 eingegeben und anschließend transformiert. Das Wortdauermaß wird in der Vorverarbeitungseinheit aus dem Spannungsverlauf auf der Telefonleitung ermittelt, indem die Zeit zwischen dem Beginn und dem Ende des Spannungssignals ermittelt wird. Als Beginn ist dabei die Überschreitung eines vorgegebenen Schwellwertes SW1 definiert. Das Ende des Spannungssignals wird festgelegt, nachdem bekannt ist, daß sich das Spannungssignal nicht mehr ändert und gleichzeitig den Schwellwert SW1 betragsmäßig unterschreitet.

Die Fuzzy-Eingabeeinheit 70 ist eingangsseitig außerdem mit einem Bussystem 72 verbunden, das mehrere Datenleitungen enthält. Über das Bussystem 72 wird der Fuzzy-Eingabeeinheit 70 übermittelt, welches Wort des Wortschatzes von der Zuordnungseinheit dem Spannungsverlauf auf der Telefonleitung zugeordnet wurde. Abhängig von den Zuständen auf den Datenleitungen des Bussystems 72 wählt die Fuzzy-Eingabeeinheit 70 zur Transformation Zugehörigkeitsfunktionen aus, die für das von der Zuordnungseinheit erkannte Wort gespeichert wurden. In einem anderen Ausführungsbeispiel werden nur Zugehörigkeitsfunktionen zu drei Wortgruppen des Wortschatzes gespeichert und die Fuzzy-Eingabeeinheit 70 verwendet zur Transformation die Zugehörigkeitsfunktionen der Wortgruppe, zu der das auf dem Bussystem 72 übermittelte Wort gehört. Diese Vorgehensweise ist sinnvoll, da zwar zwischen den Wortlängen einzelner Worte des Wortschatzes erhebliche Unterschiede bestehen können, jedoch zwischen den Worten einer Gruppe meist nur geringe Unterschiede in der Wortlänge bestehen.

Beim Erläutern der Transformation in der Fuzzy-Eingabeeinheit 70 wird auf ein Koordinatensystem 74 Bezug genommen, das Zugehörigkeitsfunktionen ZF2a bis ZF2c zeigt, die zu der Wortlänge des von der Zuordnungseinheit erkannten Wortes gehören. Auf der Ordinatenachse des Koordinatensystems 74 sind die Funktionswerte der Zugehörigkeitsfunktion ZF2a bis ZF2c abgetragen, die im Bereich zwischen Null und Eins liegen. Die Abszissenachse des Koordinatensystems 74 zeigt die Größe des auf der Leitung 12 übermittelten Wortdauermaßes WM. Der linguistischen Variablen "Wortdauermaß WM" sind drei Werte "kurz", "normal" und "lang" zugeordnet. Die Zugehörigkeitsfunktion ZF2a für den Wert "kurz" hat im wesentlichen einen ähnlichen Verlauf wie die oben erläuterte Zugehörigkeitsfunktion ZF1a. Ebenso stimmt der Verlauf der Zugehörigkeitsfunktion ZF2b für den Wert "normal" bzw. der Zugehörigkeitsfunktion ZF2c für den Wert "lang" mit dem Verlauf der Zugehörigkeitsfunktion ZF1b bzw. ZF1a überein. Auf drei Leitungen 80, 82, 84 werden die Ergebnisse der Transformation von der Fuzzy-Eingabeeinheit 70 zu einer Verknüpfungseinheit 54 übermittelt.

Die Fuzzy-Eingabeeinheit 70 gibt auf der Leitung 80 abhängig vom momentanen Wortdauermaß den Funktionswert der Zugehörigkeitsfunktion ZF2a für den Wert "kurz" aus. Dieser Wert liegt bei Eins, wenn die Wortdauer des zu verarbeitenden Schallsignals erheblich kürzer als die mittlere Dauer eines zum ausgewählten Wort gehörenden Schallsignals ist. Andernfalls liegt der Funktionswert der Zugehörigkeitsfunktion ZF2a zwischen Eins und Null oder genau bei Null. Auf der Leitung 82 wird der momentane Funktionswert der Zugehörigkeitsfunktion ZF2b für den Wert "mittel" von der Fuzzy-Eingabeeinheit 70 an die Verknüpfungseinheit 54 übermittelt. Dieser Funktionswert ist Eins oder liegt nahe Eins, wenn die Dauer des zu verarbeitenden Schallsignals etwa mit der mittleren Dauer von Schallsignalen übereinstimmt, die zu dem ausgewählten Wort gehören. Ist die gemessene Dauer des Schallsignals kürzer oder länger, so liegt der Funktionswert der Zugehörigkeitsfunktion ZF2b in der Nähe des Wertes Null bzw. ist gleich Null. Auf der Leitung 84 wird schließlich der Funktionswert der Zugehörigkeitsfunktion ZF2c für den Wert "lang" der linguistischen Variablen Wortdauermaß WM übermittelt. Dieser Funktionswert hat einen Wert nahe oder gleich Eins, falls die Dauer des zu verarbeitenden Schallsignals die durchschnittliche Dauer der Schallsignale zu dem wahrscheinlichsten Wort des Wortschatzes erheblich überschreitet. In den anderen Fällen liegt der Funktionswert nahe oder bei Null.

In der Verknüpfungseinheit 54 werden die auf den Leitungen 60 bis 64 übermittelten Funktionswerte der Zugehörigkeitsfunktionen ZF1a, ZF1b und ZF1c des Verteilungsmaßes VM mit den auf den Leitungen 80, 82 und 84 übertragenen Funktionswerten der Zugehörigkeitsfunktionen ZF2a, ZF2b und ZF2c des Wortdauermaßes WM nach vorgegebenen Verknüpfungsregeln verknüpft. Bei der Erläuterung dieser Verknüpfungsregeln wird auf ein Koordinatensystem 90 Bezug genommen, das Zugehörigkeitsfunktionen ZF3a, ZF3b und ZF3c eines Gültigkeitsmaßes GM zeigt. Auf der Ordinatenachse sind die Funktionswerte der Zugehörigkeitsfunktionen ZF3a, ZF3b und ZF3c dargestellt, deren Verlauf im wesentlichen mit den Zugehörigkeitsfunktionen ZF1a, ZF1b bzw. ZF3c übereinstimmt. Die Ordinatenachse zeigt die Werte des Gültigkeitsmaßes GM. Sämtliche Funktionswerte der Zugehörigkeitsfunktionen ZF3a, bis ZF3c liegen im Bereich von Null bis Eins. Die Zugehörigkeitsfunktion ZF3a gibt die Zugehörigkeit eines momentanen Gültigkeitsmaßes GM zum Wert "klein" des Gültigkeitsmaßes GM wieder. Der Verlauf der Zugehörigkeitsfunktion ZF3b gibt den Zusammenhang des momentanen Gültigkeitsmaßes GM und der Zugehörigkeit zum Wert "mittel" des Gültigkeitsmaßes GM an. Die Zugehörigkeitsfunktion ZF3c gibt den Zusammenhang des momentanen Gültigkeitsmaßes GM und einem Wert "hoch" des Gültigkeitsmaßes GM an.

Eine der vorgegebenen Verknüpfungsregeln in der Verknüpfungseinheit 54 lautet z.B.:
WENN Verteilungsmaß = "klein" UND Wortdauermaß = "kurz", DANN Gültigkeitsmaß = "mittel".

Die Verknüpfungsregel hat eine Voraussetzung in einem "WENN"-Teil und eine Folgerung in einem "Dann"-Teil. Somit wird beim Verknüpfen der Größen "Verteilungsmaß" und "Wortdauermaß" im "WENN"-Teil gemäß der Verknüpfungsregel eine Schlußfolgerung durchgeführt.

Zum Durchführen der UND-Verknüpfung wird z.B. das Minimum aus dem Funktionswert der Zugehörigkeitsfunktion ZF1a, d.h. für den Wert "klein", und dem Funktionswert der Zugehörigkeitsfunktion ZF2a, d.h. für den Wert "kurz", gebildet. Der so erhaltene Wert für das Gültigkeitsmaß GM gibt den momentanen Funktionswert der Zugehörigkeitsfunktion ZF3a an, wobei jedoch keine Aussage über die genaue Größe des Gültigkeitsmaßes GM getroffen werden muß. Diese Aussage ist entbehrlich, da in einer zweiten Stufe der Verknüpfung, die in der Verknüpfungseinheit 28 durchgeführt wird, weitere Verknüpfungen stattfinden. Eine sogenannte Defuzzifizierung, bei der durch eine Rücktransformation das momentane Gültigkeitsmaß GM ermittelt wird, kann somit entfallen. Der Funktionswert der Zugehörigkeitsfunktion ZF3a wird auf der Leitung 22 ausgegeben. Auf ähnliche Weise werden nach weiteren vorgegebenen Verknüpfungsregeln die Funktionswerte der Zugehörigkeitsfunktionen ZF3b für den Wert "mittel" und ZF3c für den Wert "hoch" des Gültigkeitsmaßes GM ermittelt und auf der Leitung 24 bzw. auf der Leitung 26 ausgegeben. Die Weiterverarbeitung der Funktionswerte auf den Leitungen 22, 24 und 26 in der Verknüpfungseinheit 28 wird weiter unten erläutert.

Die Fremdwortfiltereinheit 20 arbeitet ähnlich wie die Geräuschfiltereinheit 18, jedoch werden anstelle des Verteilungsmaßes VM und des Wortdauermaßes WM ein Ähnlichkeitsmaß AM und ein Differenzmaß DM verarbeitet.

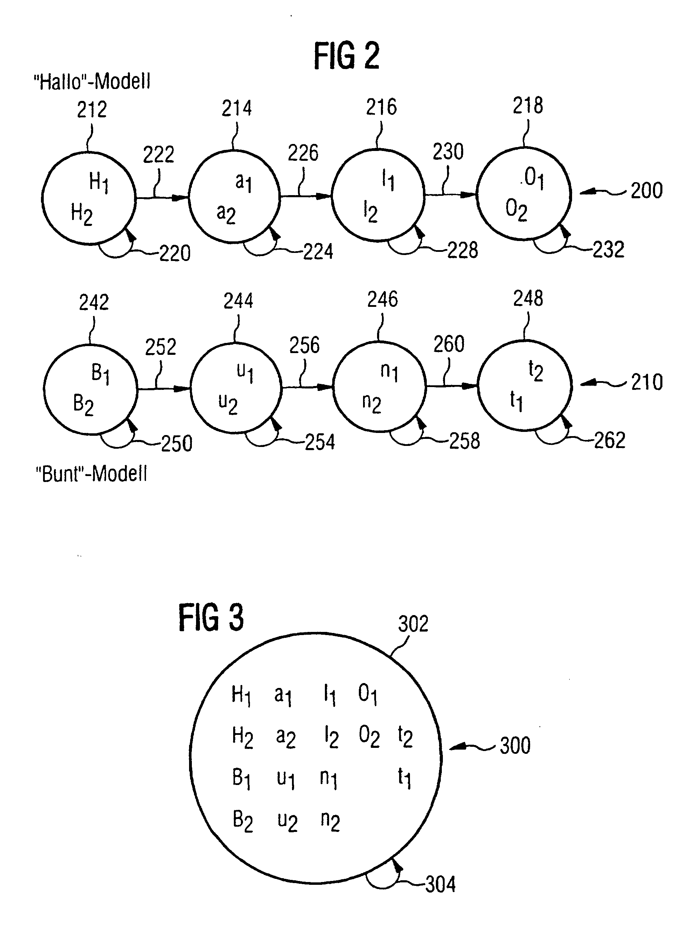

Das Ähnlichkeitsmaß AM wird von der Vorverarbeitungseinheit ermittelt und auf der Leitung 14 an eine Fuzzy-Eingabeeinheit 100 übermittelt, deren Funktionsweise ebenfalls weiter unten erläutert wird. Die Vorverarbeitungseinheit erzeugt aus dem Spannungsverlauf auf der Telefonleitung eine Folge von Merkmalsvektoren. Ein Merkmalsvektor wird z.B. erzeugt, indem aus den Abtastwerten eines Zeitintervalls von 10 ms mit einer Fourier-Transformation, die Anteile von verschiedenen Frequenzen im betrachteten Intervall berechnet werden. Anschließend werden in der Zuordnungseinheit Ähnlichkeitswerte berechnet, die die Übereinstimmung der Merkmalsvektorfolge mit Folgen von Referenzmerkmalsvektoren angeben, die mit Modellen der Worte des Wortschatzes erzeugt wurden. Ein Beispiel für ein solches Modell ist das "Hidden-Markov"-Modell. Beispiele für dieses Modell werden unten an Hand der Figuren 2 und 3 erläutert. Wenn die Zuordnungseinheit das Wort des Wortschatzes ermittelt hat, zu dem der größte Ähnlichkeitswert berechnet wurde, so wird dieser Ähnlichkeitswert auf die Zeit zwischen dem Beginn und dem Ende der zu verarbeitenden Schallschwingung normiert. Das Ergebnis ist das momentane Ähnlichkeitsmaß AM, das in die Fuzzy-Eingabeeinheit 100 eingegeben wird.

Beim Erläutern der Funktionsweise der Fuzzy-Eingabeeinheit 100 wird auf ein Koordinatensystem 102 Bezug genommen, auf dessen Abszissenachse die Größe des Ähnlichkeitsmaßes AM abgetragen ist und auf dessen Ordinatenachse die Funktionswerte von Zugehörigkeitsfunktionen ZF4a, ZF4b und ZF4c im Bereich von Null bis Eins abgetragen sind. Die Zugehörigkeitsfunktion ZF4a gibt die Zugehörigkeit des momentanen Ähnlichkeitsmaßes AM zum Wert "klein" an. Die Zugehörigkeitsfunktion ZF4b gibt die Zugehörigkeit des momentanen Ähnlichkeitsmaßes AM zum Ähnlichkeitswert "mittel" an. Die Zugehörigkeitsfunktion ZF4c gibt schließlich die Zugehörigkeit des momentanen Ähnlichkeitswertes zum Ähnlichkeitswert "hoch" an. Der zum momentanen Ähnlichkeitswert AM gehörende Funktionswert der Zugehörigkeitsfunktion ZF4a wird auf einer Leitung 110 ausgegeben. Der Funktionswert zum momentanen Ähnlichkeitswert AM der Zugehörigkeitsfunktion ZF4b bzw. der Zugehörigkeitsfunktion ZF4c wird auf einer Leitung 112 bzw. einer Leitung 114 ausgegeben. Die Leitungen 110 bis 114 verlaufen von der Fuzzy-Eingabeeinheit 100 zu einer Verknüpfungseinheit 116, deren Funktionsweise unten erläutert wird, nachdem die Funktionsweise einer weiteren Fuzzy-Eingabeeinheit 120 in der Fremdwortfiltereinheit 20 erläutert wurde.

Die Fuzzy-Eingabeeinheit 120 verarbeitet das von der Vorverarbeitungseinheit erzeugte Differenzmaß DM. Die Berechnung des Differenzmaßes DM wird unten an Hand der Figuren 2 und 3 erläutert. Das Differenzmaß DM wird auf der Leitung 16 in die Fuzzy-Eingabeeinheit 120 eingegeben und dort transformiert. Dabei werden Zugehörigkeitsfunktionen ZF5a, ZF5b und ZF5c verwendet, die in einem Koordinatensystem 122 dargestellt sind. Die Achsenbezeichnung des Koordinatensystems 122 stimmt mit der Achsenbezeichnung des Koordinatensystems 52 überein, jedoch wird anstelle des Verteilungsmaßes VM auf der Abszissenachse das Differenzmaß DM abgetragen. Auch der Verlauf der Zugehörigkeitsfunktionen ZF5a, ZF5b und ZF5c stimmt mit dem Verlauf der Zugehörigkeitsfunktionen ZF1a, ZF1b bzw. ZF1c überein. Die Zugehörigkeitsfunktion ZF5a gibt die Zugehörigkeit des momentanen Differenzmaßes DM zum Wert "klein" des Differenzmaßes DM an, und die Zugehörigkeitsfunktion ZF5b gibt die Zugehörigkeit des momentanen Differenzmaßes DM zum Wert "mittel" des Differenzmaßes DM an. Die Zugehörigkeit des momentanen Differenzmaßes DM zu einem Differenzwert "hoch" wird durch die Zugehörigkeitsfunktion ZF5c angegeben. Der Funktionswert der Zugehörigkeitsfunktion ZF5a zum momentanen Differenzmaß DM wird auf einer Leitung 130 ausgegeben. Auf einer Leitung 132 wird der Funktionswert der Zugehörigkeitsfunktion ZF5b zum momentanen Differenzmaß DM ausgegeben. Auf einer Leitung 134 wird schließlich der Funktionswert der Zugehörigkeitsfunktion ZF5c ausgegeben, der ebenfalls mit Hilfe des momentanen Differenzmaßes DM berechnet wurde. Die Leitungen 130 bis 134 verbinden die Fuzzy-Eingabeeinheit 120 mit der Verknüpfungseinheit 116.

In der Verknüpfungseinheit 116 werden die auf den Leitungen 110 bis 114 und 130 bis 134 übertragenen Funktionswerte nach vorgegebenen Verknüpfungsregeln verknüpft. Mit den Verknüpfungsregeln werden Werte eines Bekanntheitsmaßes BM ermittelt, das ein Maß für die Bekanntheit des zu verarbeitenden Spannungssignals auf der Telefonleitung ist. In einem Koordinatensystem 140 sind Zugehörigkeitsfunktionen ZF6a, ZF7a und ZF8a angegeben, die in dieser Reihenfolge zu Werten des Bekanntheitsmaßes BM "klein", "mittel" bzw. "hoch" gehören. Die Achsenbezeichnung des Koordinatensystems 140 stimmt mit der Achsenbezeichnung des Koordinatensystems 52 überein, jedoch wird anstelle des Verteilungsmaßes VM das Bekanntheitsmaß BM auf der Abszissenachse abgetragen. Der Verlauf der Zugehörigkeitsfunktion ZF6a stimmt mit dem Verlauf der Zugehörigkeitsfunktion ZF1a im wesentlichen überein. Ebenso stimmt der Verlauf der Zugehörigkeitsfunktion ZF6b im wesentlichen mit dem Verlauf der Zugehörigkeitsfunktion ZF1b sowie der Verlauf der Zugehörigkeitsfunktion ZF7b mit dem Verlauf der Zugehörigkeitsfunktion ZF1c überein. Wie auch beim Gültigkeitsmaß GM in der Verknüpfungseinheit 54 wird das Bekanntheitsmaß BM in der Verknüpfungseinheit 116 nicht direkt bestimmt, da sich die zweite Stufe der Verknüpfung in der Verknüpfungseinheit 28 noch anschließt.

Eine Regel in der Verknüpfungseinheit 161 lautet z.B.:
WENN Ähnlichkeitsmaß = "hoch" UND Differenzmaß = "klein" DANN Bekanntheitsmaß = "hoch".

Die UND-Verknüpfung wird wiederum durch die Wahl des kleineren Funktionswertes der Zugehörigkeitsfunktion ZF4c für den Wert "hoch" oder des Funktionswertes der Zugehörigkeitsfunktion ZF5c für den Wert "klein" durchgeführt. Der kleinere der beiden Funktionswerte wird dann auf der Leitung 34 ausgegeben. Auf der Leitung 30 wird der für die Zugehörigkeitsfunktion ZF6a ermittelte Funktionswert und auf der Leitung 32 wird der für die Zugehörigkeitsfunktion ZF6b ermittelte Funktionswert ausgegeben. Somit entfällt die Bestimmung eines genauen Wertes für das Bekanntheitsmaß BM. Die Funktionswerte auf den Leitungen 30, 32 und 34 ermöglichen jedoch Aussagen über die Bekanntheit, die in der Verknüpfungseinheit 28 berücksichtigt werden.

In der Verknüpfungseinheit 28 werden die Funktionswerte auf den Leitungen 22, 24 und 26 sowie auf den Leitungen 30, 32 und 34 nach weiteren vorgegebenen Verknüpfungsregeln verknüpft. Die Regeln führen dabei zu Aussagen über die Funktionswerte von Zugehörigkeitsfunktionen ZF7a, ZF7b und ZF7c, die in einem Koordinatensystem 150 dargestellt sind, auf dessen Ordinatenachse wiederum die Funktionswerte der Zugehörigkeitsfunktionen ZF7a bis ZF7c und auf dessen Abszissenachse des Zuverlässigkeitsmaß ZM abgetragen ist. Der Verlauf der Zugehörigkeitsfunktion ZF7a, ZF7b bzw. ZF7c stimmt in dieser Reihenfolge im wesentlichen mit dem Verlauf der Zugehörigkeitsfunktion ZF1a, ZF1b bzw. ZF1c überein. Durch das Ausführen von Verknüpfungen nach Verknüpfungsregeln wie:
WENN Gültigkeitsmaß = "hoch" UND Bekanntheitsmaß = "hoch", DANN Zuverlässigkeitsmaß = "hoch",

werden z.B. Funktionswerte für die Zugehörigkeitsfunktionen ZF7c bestimmt. Mit ähnlichen Verknüpfungsregeln werden Funktionswerte für die Zuverlässigkeitsfunktion ZF7a und ZF7b ermittelt. Diese Funktionswerte liegen an den Eingängen der Fuzzy-Ausgabeeinheit 36 an, die z.B. durch Bildung des Flächenschwerpunkts von Flächen unterhalb der Funktionswerte der jeweiligen Zugehörigkeitsfunktionen ZF7a bis ZF7c das momentane Zuverlässigkeitsmaß ZM ermittelt und auf der Leitung 38 ausgibt.

Die Ausgabeeinheit 40 erzeugt dann wie oben bereits erläutert abhängig vom momentanen Zuverlässigkeitsmaß ZM Schaltzustände auf den Leitungen 42 bis 46.

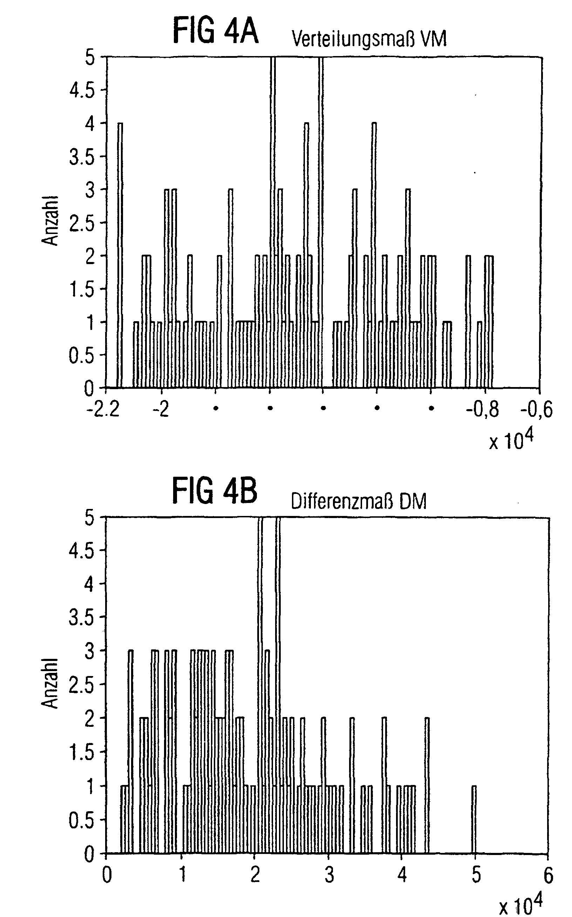

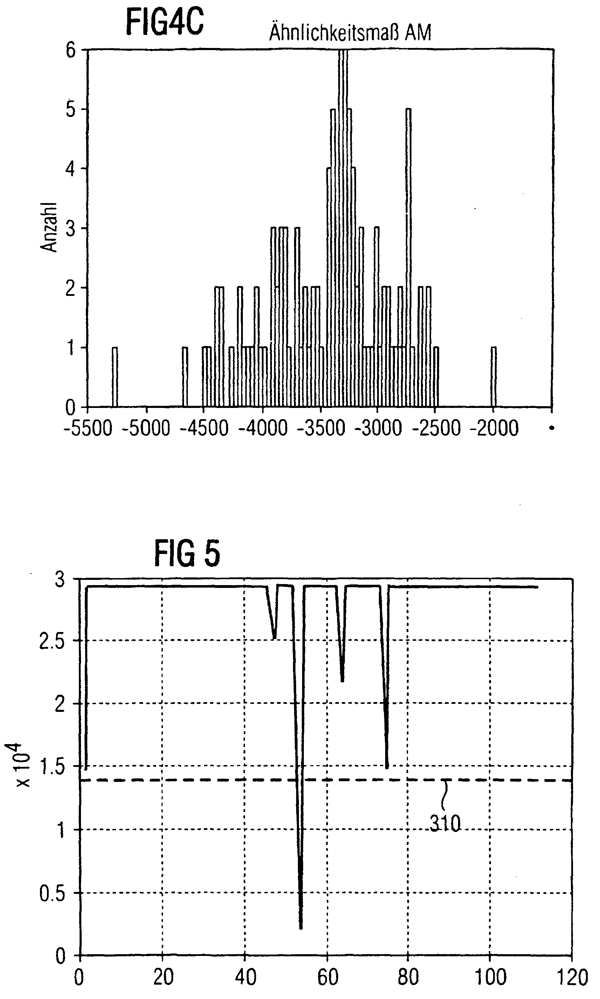

Die in Figur 1 gezeigten Einheiten werden auch als Module in einem Programm realisiert. Die Zugehörigkeitsfunktionen ZF1a bis ZF7c werden wie unten an Hand der Figur 4 noch erläutert festgelegt. Dabei wird insbesondere die Flankensteilheit und der Beginn des Fallens bzw. des Steigens der jeweiligen Zugehörigkeitsfunktion ZF1a bis ZF7c festgelegt.

Figur 2 zeigt zwei "Hidden-Markov"-Modelle 200 und 210. Dabei modelliert das Modell 200 das Wort "Hallo" und das Modell 210 das Wort "bunt". Das Modell 200 für das Wort "Hallo" hat vier Zustände 212, 214, 216 und 218. Dem Zustand 212 sind zwei Merkmalsvektoren H1 und H2 zugeordnet, die bei der Aussprache des Buchstabens "H" auftreten können. So könnte der Merkmalsvektor H1 aus dem Spannungsverlauf erzeugt worden sein, der beim Aussprechen des Buchstabens "H" am Beginn des Wortes "Hallo" erzeugt wird. Der Merkmalsvektor H2 gehört zu einem Spannungsverlauf, der am Ende des Aussprechens des Buchstabens "H" vor dem Aussprechen des Buchstabens "a" auftritt. Sind die Merkmalsvektoren H1 und H2 jeweils nur auf ein Zeitintervall von 10 ms bezogen, so werden sich diese Merkmalsvektoren wiederholen, da die Aussprache des Buchstabens "H" im allgemeinen länger als 10 ms ist. Somit wird der Zustand 212 mehrmals hintereinander auftreten. Dies ist durch einen Pfeil 220 angedeutet. Ein Pfeil 222 zeigt den Übergang vom Zustand 212 bis zum Zustand 214, wenn nach der Aussprache des Buchstabens "H" die Aussprache des Buchstabens "a" folgt. Wann dies der Fall ist, hängt zum einen vom Sprecher und zum anderen auch von der momentanen Aussprache des Sprechers ab. Somit können nur Wahrscheinlichkeiten für den Übergang vom Zustand 212 wieder zum Zustand 212 bzw. für den Übergang vom Zustand 212 zum Zustand 214 angegeben werden. Diese Wahrscheinlichkeiten werden experimentell ermittelt.

Dem Zustand 214 sind zwei Merkmalsvektoren a1, a2 zugeordnet, die Merkmale bei der Aussprache des Buchstabens "a" im Wort "Hallo" enthalten. Vom Zustand 214 kann wiederum zum Zustand 214 übergegangen werden, vgl. Pfeil 224, oder es wird zum nächsten Zustand 216 übergegangen, vgl. Pfeil 226. Der Zustand 216 enthält zwei Merkmalsvektoren 11 und 12, die dem Buchstaben "l" im Wort "Hallo" zugeordnet sind. Nach dem Zustand 216 kann wieder der Zustand 216, vgl. Pfeil 228, bzw. der Zustand 218 folgen, vgl. Pfeil 230. Der Zustand 218 enthält zwei Merkmalsvektoren o1 und o2, die Merkmale von Schallsignalen enthalten, die bei der Aussprache des Buchstabens "o" im Wort "Hallo" auftreten. Wie durch einen Pfeil 232 angedeutet, kann auch der Zustand 218 mehrmals hintereinander auftreten, bevor das Wort "Hallo" beendet ist.

Das Modell 210 für das Wort "bunt" hat vier Zustände 242, 244, 246 und 248, denen in dieser Reihenfolge Merkmalsvektoren zugeordnet sind, die bei der Aussprache des Buchstabens "b", "u", "n" bzw. "t" auftreten. Dabei sind jedem Zustand 242 bis 248 in dieser Reihenfolge jeweils Merkmalsvektoren B1, B2; u1, u; n1, n2 sowie t1 und t2 zugeordnet. Die Übergänge zwischen den Zuständen 242 bis 248 sind durch Pfeile 250 bis 262 dargestellt.

Die oben erwähnten Ähnlichkeitswerte zur Berechnung des Ähnlichkeitsmaßes AM werden ermittelt, indem aus dem zu verarbeitenden Spannungsverlauf auf der Telefonleitung eine Folge von Merkmalsvektoren erzeugt wird, die mit den Merkmalsvektoren jedes Modells 200 und 210 verglichen werden. Dabei wird im Modell 200 und im Modell 210 jeweils die Merkmalsvektorfolge ermittelt, die der Merkmalsvektorfolge des Spannungsverlaufs auf der Telefonleitung am ähnlichsten ist. Mit einem bekannten Distanzmaß, z.B. der Abstand zwischen zwei Vektoren, kann dann der Ähnlichkeitswert für jedes Modell 200, 210 ermittelt werden. Zur Berechnung des Ähnlichkeitsmaßes AM wird dann der größte Ähnlichkeitswert verwendet. Bei zwei Modellen 200 und 210 also der Ähnlichkeitswert des Modells 200 oder des Modells 210.

Figur 3 zeigt ein gemeinsames "Hidden-Markov"-Modell 300 für die Worte "Hallo" und "bunt", die die Worte eines bekannten Wortschatzes bilden. Das Modell 300 hat nur einen einzigen Zustand 302, dem sämtliche Merkmalsvektoren der Modelle 200 und 210 (vgl. Figur 2) zugeordnet sind. Nach dem Zustand 302 folgt wie durch einen Pfeil 304 angedeutet immer wieder der Zustand 302, bis die Modellierung beendet ist. Bei der Ermittlung des Differenzmaßes DM wird auch für das gemeinsame Modell 300 ein Ähnlichkeitswert bestimmt. Bei der Äußerung "Hallo" würde das "Hallo"-Modell 200 (vgl. Figur 2) die Folge "H1, H1, H2, a2, a2, 11, 11, 11, 12, 12, o1, o2" generieren. Diese Folge bietet eine gute Näherung der Äußerung. Das gemeinsame Modell 300 könnte z.B. folgendes generieren: "H1, H1, H2, a2, a2, t1, 11, 11, 12, 12, o1, o2". Der Merkmalsvektor t1 wurde hinzugefügt, weil er z.B. zu einem Geräusch in der Äußerung paßt. Der Unterschied der Ähnlichkeitswerte zwischen dem "Hallo"-Modell 200 und dem gemeinsamen Modell 300 ist gering. Das Differenzmaß DM hat somit einen geringen Wert, der anzeigt, daß das Wort "Hallo" zum Wortschatz gehört.

Bei der Äußerung "Laub", die zu einem Fremdwort gehört, würde das "Hallo"-Modell 200 (vgl. Figur 2) die Folge "H1, a1, a2, a2, a2, a1, a1, a1, a2, 12, o1" generieren. Dies ist eine schlechte Nachbildung der Äußerung. Das "bunt"-Modell 210 (vgl. Figur 2) würde auch eine schlechte Näherung erzeugen. Das gemeinsame Modell 300 hingegen würde folgendes generieren: "l1, l1, l2, a2, a2, u1, u1, u1, b2, b2, b1". Dies bildet eine gute Nachbildung der Äußerung. Da die Ähnlichkeitswerte zwischen dem besten Wortmodell 200 bzw. 210 und dem Ähnlichkeitswert des gemeinsamen Modells 300 groß ist, hat auch das Differenzmaß DM einen großen Wert, der anzeigt, daß die Äußerung "Laub" zu einem Fremdwort gehört.

Figur 4 zeigt in Teilen a, b und c jeweils ein Häufigkeitsdiagramm, das beim Festlegen von Zugehörigkeitsfunktionen verwendet wird. Auf der Ordinatenachse ist jeweils die Anzahl von Äußerungen abgetragen, die zu einer auf der Abszissenachse abgetragenen Merkmalsausprägung gehören. Zum Ermitteln der Häufigkeitsdiagramme wurden 120 Äußerungen des Wortschatzes verarbeitet.

Teil a der Figur 4 zeigt ein Histogramm zum Verteilungsmaß VM. Bei Geräuschen liegt das Verteilungsmaß VM in der Regel über -8000. Für den Wert "klein" der Zugehörigkeitsfunktion ZF1a wäre demzufolge ein Bereich von etwa -32000 bis -8000 festzulegen. Ebenso werden dann die Bereiche für die Zugehörigkeitsfunktionen ZF1b und ZF1c festgelegt. Das im Teil a der Figur 4 gezeigte Histogramm wurde erzeugt, indem für jede der 120 Äußerungen die Ähnlichkeitswerte für alle Worte des Wortschatzes ermittelt wurden. Anschließend wurde für jede der 120 Äußerungen aus den für sie ermittelten Ähnlichkeitswerten die Abweichung dieser Ähnlichkeitswerte von einer Gleichverteilung ermittelt. Das Ergebnis - das jeweilige Verteilungsmaß VM - wurde dann in dem im Teil a der Figur 4 gezeigten Histogramm eingetragen.

Teil b der Figur 4 zeigt das Histogramm zum Differenzmaß DM. Dieses Diagramm wird zum Festlegen der Zugehörigkeitsfunktionen ZF5a bis ZF5c (vgl. Figur 1) verwendet. Beim Erstellen des Histogramms des Teils b der Figur 4 wurde für jede der 120 Äußerungen das Differenzmaß DM ermittelt, wie oben an Hand der Figuren 2 und 3 erläutert.

Teil c der Figur 4 zeigt das Histogramm zum Ähnlichkeitsmaß AM. Dieses Histogramm wird zum Festlegen der Zugehörigkeitsfunktionen ZF4a bis ZF4c (vgl. Figur 1) verwendet. Beim Erstellen des Histogramms im Teil c der Figur 4 wurde für jede der 120 Äußerungen das Ähnlichkeitsmaß AM ermittelt. Dabei waren 120 Äußerungen die zu verarbeitenden Schallsignale.

Weitere Histogramme wurden zum Festlegen der Zugehörigkeitsfunktionen ZF2a, ZF2b und ZF2c des Wortdauermaßes WM ermittelt, vgl. auch Figur 1. Dabei wurden die 120 Äußerungen abhängig von der Länge der jeweiligen Äußerung in drei Gruppen unterteilt. Für jede Gruppe wurde dann ein Histogramm zum Wortdauermaß WM festgelegt, das zum Ermitteln der Zuverlässigkeitsfunktionen ZF2a bis ZF2c der jeweiligen Gruppe genutzt wurde.

Figur 5 zeigt die Ausgangswerte auf der Leitung 38 (vgl. Figur 1) für 120 Äußerungen des Wortschatzes, denen jeweils eine auf der Abszissenachse abgetragene natürliche Zahl zwischen 0 und 119 zugeordnet ist. Auf der Ordinatenachse sind die Ausgabewerte auf der Leitung 38 abgetragen. Bei einer Akzeptanzschwelle von 14000, vgl. Strichlinie 310, wird lediglich ein Wort zurückgewiesen. Dadurch sinkt die Erkennungsrate um lediglich 0,8% auf 99,2%. Für diesen Schwellwert wurden bei einem weiteren Test mit Fremdwörtern etwa 80% der Äußerungen zurückgewiesen. Außerdem werden etwa 99% der Geräusche abgewiesen.

## Patentansprüche

1. Verfahren zur Zuordnung von Schallsignalen zu Wörtern eines vorgegebenen Wortschatzes, insbesondere zur Verwendung in einer Telekommunikationsanlage,
bei dem aus den Schallsignalen Merkmalsvektoren gebildet und ausgewertet werden, wobei jedem auszuwertenden Schallsignal zumindest ein Wort des Wortschatzes zugeordnet wird,
und bei dem solche Schallsignale zurückgewiesen werden, die nicht Bestandteil des Wortschatzes sind,
**dadurch gekennzeichnet,**
**dass** aus jeweils einem Schallsignal Schalldaten erzeugt werden, die jeweils ein Maß für ein vorgegebenes Merkmal (VM, WM, AM, DM) des Schallsignals sind, und die zumindest einer Filtereinheit (18, 20, 28) zugeführt werden, bei der
- eine erste Zugehörigkeitsfunktion (ZF1a) den Zusammenhang zwischen dem tatsächlichen Maß des Merkmals (VM) und der Zugehörigkeit zu einer vorgegebenen ersten Ausprägung des Merkmals (VM) angibt,
- mindestens eine weitere Zugehörigkeitsfunktion (ZF1b) den Zusammenhang zwischen dem tatsächlichen Maß des Merkmals (VM) und der Zugehörigkeit zu einer von der ersten Ausprägung verschiedenen zweiten Ausprägung des Merkmals (VM) angibt,
- zu dem Schalldatum aus der ersten Zugehörigkeitsfunktion (ZF1a) ein erster Funktionswert (60) und aus der zweiten Zugehörigkeitsfunktion (ZF1b) ein zweiter Funktionswert (62) ermittelt werden,
- aus diesen beiden Funktionswerten (60, 62) und weiteren Funktionswerten (64, 80, 82, 84, 110, 112, 114, 130, 132, 134), die in analoger Weise aus weiteren Merkmalen bestimmt werden, nach vorgegebenen auf Fuzzy-Logik basierenden Verknüpfungsregeln ein Zuverlässigkeitswert (ZM) ermittelt wird, der angibt, mit welcher Wahrscheinlichkeit dem Schallsignal überhaupt ein Wort aus dem Wortschatz zugeordnet werden kann, und dem Schallsignal nur dann ein Wort des Wortschatzes zugeordnet wird, wenn der Zuverlässigkeitswert (ZM) in einem vorgegebenen Bereich liegt, und bei dem das Schallsignal als nicht zu einem Wort des Wortschatzes gehörend zurückgewiesen wird, wenn der Zuverlässigkeitswert (ZM) außerhalb des vorgegebenen Bereiches liegt.

2. Verfahren nach Anspruch 1, **dadurch gekennzeichnet, daß** das vorgegebene Merkmal (WM) die Zeit zwischen dem Beginn und dem Ende des Schallsignals ist.

3. Verfahren nach Anspruch 2, **dadurch gekennzeichnet, daß** beim Festlegen der Zugehörigkeitsfunktionen (ZF2a bis ZF2c) die durchschnittliche Dauer der Sprachsignale zu mindestens einem Wort des Wortschatzes berücksichtigt wird.

4. Verfahren nach Anspruch 3, **dadurch gekennzeichnet, daß** für mindestens zwei Gruppen von Wörtern des Wortschatzes Zugehörigkeitsfunktionen (ZF2a bis ZF2c) ermittelt werden,
vor dem Ermitteln des Zuverlässigkeitswertes (ZM) das Wort des Wortschatzes ermittelt wird, das wahrscheinlich zum Schallsignal gehört,
und daß beim Ermitteln des Zuverlässigkeitswertes (ZM) die Zuverlässigkeitsfunktionen (ZF2a bis ZF2c) der Gruppe verwendet werden, zu der das ermittelte Wort gehört.

5. Verfahren nach einem der vorhergehenden Ansprüche, **dadurch gekennzeichnet, daß** für jedes Wort des Wortschatzes durch einen Merkmalsvergleich zwischen einem jeweiligen Referenzsignal und dem zu verarbeitenden Schallsignal ein Ähnlichkeitswert ermittelt wird, der die Übereinstimmung des jeweiligen Referenzsignals mit dem zu verarbeitenden Schallsignal angibt,
und daß das vorgegebene Merkmal (VM) die Abweichung der Verteilung der ermittelten Ähnlichkeitswerte von einer Gleichverteilung ist.

6. Verfahren nach Anspruch 5, **dadurch gekennzeichnet, daß** beim Festlegen der Zugehörigkeitsfunktionen (ZF1a bis ZF1c) für mindestens ein ausgewähltes Referenzsignal oder ein diesem ähnliches Schallsignal die Ähnlichkeitswerte für alle Worte der Datenbasis ermittelt werden, wobei das ausgewählte Referenzsignal anstelle des zu verarbeitenden Signals verwendet wird,
und daß beim Festlegen der Zugehörigkeitsfunktion (ZF1a bis ZF1c) die Abweichung der Verteilung der mit dem ausgewählten Referenzsignal ermittelten Ähnlichkeitswerte von einer Gleichverteilung ermittelt wird.

7. Verfahren nach Anspruch 5 oder 6, **dadurch gekennzeichnet, daß** die Abweichung der Verteilung der Ähnlichkeitswerte von einer Gleichverteilung durch eine Summenbildung über die mit einem jeweiligen Wichtungsfaktor gewichteten Ähnlichkeitswert ermittelt wird,
und daß die Größe des jeweiligen Wichtungsfaktors vorzugsweise vom Verhältnis des mit diesem Wichtungsfaktor gewichteten Ähnlichkeitswertes zum größten Ähnlichkeitswert abhängt.

8. Verfahren nach einem der vorhergehenden Ansprüche, **dadurch gekennzeichnet, daß** für jedes Wort der Datenbasis durch einen Merkmalsvergleich zwischen einem jeweiligen Referenzsignal und dem zu verarbeitenden Schallsignal ein Ähnlichkeitswert ermittelt wird, der die Übereinstimmung des Referenzsignals mit dem zu verarbeitenden Schallsignal angibt,
und daß das Merkmal (AM) der auf die Zeit zwischen dem Beginn und dem Ende des zu verarbeitenden Schallsignals normierte Ähnlichkeitswert ist, der die beste Übereinstimmung angibt.

9. Verfahren nach Anspruch 8, **dadurch gekennzeichnet, daß** beim Festlegen der Zugehörigkeitsfunktionen (ZF4a bis ZF4c) mindestens ein normierter Ähnlichkeitswert berücksichtigt wird, bei dessen Berechnung anstelle des zu verarbeitenden Schallsignals ein Referenzsignal oder ein diesem ähnliches Schallsignal verwendet wird.

10. Verfahren nach einem der vorhergehenden Ansprüche, **dadurch gekennzeichnet, daß** für jedes Wort des Wortschatzes ein Modell (200, 210) als Aufeinanderfolge mindestens eines Zustandes (212 bis 218; 242 bis 262) festgelegt ist, vorzugsweise ein sogenanntes "Hidden-Markov"-Modell,
wobei dem Zustand (212 bis 218; 242 bis 262) mindestens ein Referenzmerkmalsvektor (H1 bis o2; B1 bis t2) aus einem oder mehreren Merkmalen eines zum jeweiligen Modell gehörenden Referenzsignals zugeordnet ist,
ein gemeinsames Modell (300) für alle Worte der Datenbasis einen einzigen Zustand (302) hat, dem zumindest ein großer Teil der Referenzmerkmalsvektoren (H1 bis t2) zugeordnet ist,
aus dem zu verarbeitenden Schallsignal eine Folge von Merkmalsvektoren erzeugt wird,
aus der erzeugten Folge von Merkmalsvektoren für jedes Modell (200, 210, 300) ein Ähnlichkeitswert berechnet wird, der ein Maß für die Übereinstimmung des zu verarbeitenden Schallsignals mit einem Referenzsignal ist, das mit dem jeweiligen Modell (200, 210, 300) generiert werden kann,
und daß das Merkmal (DM) ein aus dem größten Ähnlichkeitswert der Einzelmodelle (200, 210) und dem Ähnlichkeitswert des gemeinsamen Modells (300) vorzugsweise durch Differenzbildung ermittelter Vergleichswert ist.

11. Verfahren nach Anspruch 10, **dadurch gekennzeichnet, daß** beim Festlegen der Zugehörigkeitsfunktionen (ZF5a bis ZF5b) mindestens ein Vergleichswert ermittelt wird, bei dessen Berechnung anstelle des zu verarbeitenden Schallsignals ein Referenzsignal oder ein diesem ähnliches Schallsignal verwendet wird.

12. Verfahren nach einem der vorhergehenden Ansprüche, **dadurch gekennzeichnet, daß** der Zuverlässigkeitswert (ZW) in mindestens zwei Verfahrensstufen berechnet wird,
in einem ersten Teilverfahren der ersten Verfahrensstufe aus den Funktionswerten zu mindestens zwei Merkmalen (VM, WM) des Schallsignals gemäß vorgegebenen ersten Verknüpfungsregeln mindestens ein erster Zwischenwert ermittelt wird,
in mindestens einem weiteren Teilverfahren der ersten Verfahrensstufe aus den Funktionswerten zu mindestens zwei weiteren Merkmalen (AM, DM) des Schallsignals gemäß vorgegebener weiterer Verknüpfungsregeln mindestens ein weiterer Zwischenwert ermittelt wird,
und daß in der zweiten Verfahrensstufe aus dem ersten Zwischenwert und dem zweiten Zwischenwert nach vorgegebenen Verknüpfungsregeln der Zuverlässigkeitswert (ZW) erzeugt wird.

13. Verfahren nach Anspruch 12, **dadurch gekennzeichnet, daß** die ersten beiden Merkmale (VM, WM) zum Unterscheiden von Schallsignalen zu Geräuschen und von Schallsignalen zu Worten des Wortschatzes geeignet sind,
und/oder daß die weiteren beiden Merkmale (AM, DM) zum Unterscheiden von Schallsignalen zu Worten, die nicht im Wortschatz enthalten sind, und von Schallsignalen zu Worten des Wortschatzes geeignet sind.

14. Anlage zum Verarbeiten von Schallsignalen, insbesondere zum Durchführen des Verfahrens nach einem der vorhergehenden Ansprüche,
die aus den Schallsignalen Merkmalsvektoren bildet und auswertet, wobei jedem auszuwertenden Schallsignal zumindest ein Wort des Wortschatzes zugeordnet wird, und mit der solche Schallsignale zurückgewiesen werden, die nicht Bestandteil des Wortschatzes sind,
**dadurch gekennzeichnet,**
**dass** eine Wandlereinheit aus jeweils einem Schallsignal mindestens ein Schalldatum erzeugt, das die tatsächliche Ausprägung eines vorgegebenen Merkmals (VM, WM, AM, DM) des Schallsignals angibt und welches einer Filtereinheit (18, 20, 28) zugeführt wird,
wobei eine Berechnungseinheit (50) mit einer ersten Zugehörigkeitsfunktion (ZF1a) den Zusammenhang zwischen dem tatsächlichen Maß des Merkmals (VM) und der Zugehörigkeit zu einer vorgegebenen ersten Ausprägung des Merkmals (VM) angibt, und mit mindestens einer weiteren Zugehörigkeitsfunktion (ZF1b) den Zusammenhang zwischen dem tatsächlichen Maß des Merkmals (VM) und der Zugehörigkeit zu einer von der ersten Ausprägung verschiedenen zweiten Ausprägung des Merkmals (VM) angibt,
wobei zu dem Schalldatum aus der ersten Zugehörigkeitsfunktion (ZF1a) ein erster Funktionswert (60) und aus der zweiten Zugehörigkeitsfunktion (ZF1b) ein zweiter Funktionswert (62) ermittelt werden,
wobei aus diesen beiden Funktionswerten (60, 62) und mit von weiteren Berechnungseinheiten (70, 100, 120) berechneten weiteren Funktionswerten (64, 110, 112, 114, 130, 132, 134), die in analoger Weise aus diesem und weiteren Merkmalen (VM, WM, AM, DM) bestimmt werden, nach vorgegebenen auf Fuzzy-Logik basierenden Verknüpfungsregelnein Zuverlässigkeitswert (ZM) ermittelt wird, der durch eine Auswerteeinheit (40) ausgewertet wird und angibt, mit welcher Wahrscheinlichkeit dem Schallsignal überhaupt ein Wort aus dem Wortschatz zugeordnet werden kann, und
wobei dem Schallsignal nur dann ein Wort des Wortschatzes zugeordnet wird, wenn der Zuverlässigkeitswert (ZM) in einem vorgegebenen Bereich liegt, und
wobei das Schallsignal als nicht zu einem Wort des Wortschatzes gehörend zurückgewiesen wird, wenn der Zuverlässigkeitswert (ZM) außerhalb des vorgegebenen Bereiches liegt.

15. Anlage nach Anspruch 14, **dadurch gekennzeichnet, daß** sie in einer Telekommunikationsanlage eingesetzt wird.

## Claims

1. Method for assigning sound signals to words of a predefined vocabulary, in particular for use in a telecommunications system, in which feature vectors are formed from the sound signals and evaluated, at least one word of the vocabulary being assigned to each sound signal which is to be evaluated, and in which sound signals which are not part of the vocabulary are rejected, **characterized**
**in that** sound data is generated from one sound signal in each case, said data being in each case a measure of a predefined feature (VM, WM, AM, DM,) of the sound signal and being fed to at least one filter unit (18, 20, 28) in which
- a first membership function (ZF1a) specifies the relationship between the actual measure of the feature (VM) and the association with a predefined first embodiment of the feature (VM),
- at least one further membership function (ZF1b) specifies the relationship between the actual measure of the feature (VM) and the association with a second embodiment of the feature (VM), which is different from the first embodiment,
- a first function value (60) for the sound data item is determined from the first membership function (ZF1a), and a second function value (62) is determined from the second membership function (ZF1b),
- a reliability value (ZM), which specifies the probability with which a word from the vocabulary can at all be assigned to the sound signal, is determined, according to predefined logic operation rules which are based in fuzzy logic, from these two function values (60, 62) and further function values (64, 80, 82, 84, 110, 112, 114, 130, 132, 134) which are determined from further features in an analogous fashion, and a word of the vocabulary is assigned to the sound signal only if the reliability value (ZM) lies in a predefined range, and in which the sound signal is rejected as not being associated with a word of the vocabulary if the reliability value (ZM) lies outside the predefined range.

2. Method according to Claim 1, **characterized in that** the predefined feature (WM) is the time between the start and the end of the sound signal.

3. Method according to Claim 2, **characterized in that**, when the membership functions (ZF2a to ZF2c) are defined, the average duration of the speech signals with respect to at least one word of the vocabulary is taken into account.

4. Method according to Claim 3, **characterized in that** membership functions (ZF2a to ZF2c) are determined for at least two groups of words of the vocabulary,
the word of the vocabulary which is probably associated with the sound signal is determined before the reliability value (ZM) is determined,
and **in that**, when the reliability value (ZM) is determined, the reliability functions (ZF2a to ZF2c) of the group with which the determined value is associated are used.

5. Method according to one of the preceding claims, **characterized in that** a similarity value, which specifies the correspondence between a respective reference signal and the sound signal which is to be processed, is determined for each word of the vocabulary by means of a feature comparison between the respective reference signal and the sound signal which is to be processed,
and **in that** the predefined feature (VM) is the deviation of the distribution of the determined similarity values from an equal distribution.

6. Method according to Claim 5, **characterized in that**, when the membership functions (ZF1a to ZF1c) for at least one selected reference signal or a sound signal which is similar thereto is defined, the similarity values for all the words of the database are determined, the selected reference signal being used instead of the signal which is to be processed,
and **in that**, when the membership function (ZF1a to ZF1c) is defined, the deviation of the distribution of the similarity values which are determined with the selected reference signal from an equal distribution is determined.

7. Method according to Claim 5 or 6, **characterized in that** the deviation of the distribution of the similarity values from an equal distribution is determined by forming a sum of the similarity values which are weighted with a respective weighting factor,
and **in that** the magnitude of the respective weighting factor preferably depends on the ratio of the similarity value which is weighted with this weighted factor with respect to the largest similarity value.

8. Method according to one of the preceding claims, **characterized in that** a similarity value, which specifies the correspondence between a reference signal and the sound signal which is to be processed, is determined for each word of the database by means of a feature comparison between the respective reference signal and the sound signal which is to be processed,
and **in that** the feature (AM) is the similarity value which is standardized to the time between the start and' the end of the sound signal which is to be processed and which specifies the best correspondence.

9. Method according to Claim 8, **characterized in that**, when the membership functions (ZF4a to ZF4c) are defined, at least one standardized similarity value is taken into account, a reference signal or sound signal which is similar thereto being used in its calculation instead of the sound signal which is to be processed.

10. Method according to one of the preceding claims, **characterized in that** a model (200, 210), preferably what is referred to as a Hidden Markov Model, is defined as a sequence of at least one state (212 to 218; 242 to 262) for each word of the vocabulary,
at least one reference feature vector (H1 to o2; B1 to t2) from one or more features of a reference signal which is associated with the respective model being assigned to the state (212 to 218; 242 to 262),
a common model (300) for all the words of the database having a single state (302) to which at least a large number of the reference feature vectors (H1 to t2) are assigned,
a series of feature vectors being generated from the sound signal which is to be processed,
a similarity value, which is a measure of the correspondence between the sound signal which is to be processed and a reference signal which can be generated with the respective model (200, 210, 300) being calculated from the generated series of feature vectors for each model (200, 210, 300),
and **in that** the feature (DM) is a comparison value which is determined from the largest similarity value of the individual models (200, 210) and the similarity value of the common model (300), preferably by forming differences.

11. Method according to Claim 10, **characterized in that**, when the membership functions (ZF5a to ZF5b) are defined, at least one comparison value is determined, a reference signal or a sound signal which is similar thereto being used in its calculation instead of the sound signal which is to be processed.

12. Method according to one of the preceding claims, **characterized in that** the reliability value (ZW) is calculated in at least two method steps,
in a first method component of the first method step a first intermediate value is determined from the function values for at least two features (VM, WM) of the sound signal in accordance with predefined first logic operation rules,
in at least one further method component of the first method step at least one further intermediate value is determined from the function values for at least two further features (AM, DM) of the sound signal in accordance with further predefined logic operation rules,
and **in that** in the second method step the reliability value (ZW) is generated from the first intermediate value and the second intermediate value according to predefined logic operation rules.

13. Method according to Claim 12, **characterized in that** the first two features (VM, WM) are suitable for distinguishing sound signals from noises and sound signals from words of the vocabulary,
and/or **in that** the two further features (AM, DM) are suitable for distinguishing sound signals from words which are not contained in the vocabulary, and sound signals from words of the vocabulary.

14. System for processing sound signals, in particular for carrying out the method according to one of the preceding claims,
which forms feature vectors from the sound signals and evaluates them, at least one word of the vocabulary being assigned to each sound signal which is to be evaluated, and with which sound signals which are not part of the vocabulary are rejected, **characterized**
**in that** a converter unit generates, from one sound signal in each case, at least one sound data item which specifies the actual embodiment of a predefined feature (VM, WM, AM, DM) of the sound signal and which is fed to a filter unit (18, 20, 28),
a calculation unit (50) specifying, with a first membership function (ZF1a), the relationship between the actual measure of the feature (VM) and the association with a predefined first embodiment of the feature (VM), and specifying, with at least one further membership function (ZF1b), the relationship between the actual measure of the feature (VM) and the association with a second embodiment of the feature (VM), which is different from the first embodiment,
a first function value (60) for the sound data item being determined from the first membership function (ZF1a), and a second function value (62) for the sound data item being determined from the second membership function (ZF1b),
a reliability value (ZM), which is evaluated by means of an evaluation unit (40) and specifies the probability with which a word of the vocabulary can at all be assigned to the sound signal, being determined, according to predefined logic operation rules which are based on fuzzy logic, from these two function values (60, 62) and with further function values (64, 110, 112, 114, 130, 132, 134) which are calculated by further calculation units (70, 100, 120) and are determined from this feature and further features (VM, WM, AM, DM) in an analogous fashion, and
a word of the vocabulary being assigned to the sound signal only if the reliability value (ZM) lies in a predefined range, and
the sound signal being rejected as not being associated with a word of the vocabulary if the reliability value (ZM) lies outside the predefined range.

15. System according to Claim 14, **characterized in that** it is used in a telecommunications system.

## Revendications

1. Procédé pour l'association de signaux acoustiques à des mots d'un vocabulaire prédéterminé, notamment en vue d'une utilisation dans une installation de télécommunications,
dans lequel on forme et on exploite des vecteurs de caractéristiques à partir des signaux acoustiques, au moins un mot du vocabulaire étant associé à chaque signal acoustique à exploiter,
et dans lequel on rejette des signaux acoustiques qui ne font pas partie du vocabulaire,
**caractérisé par le fait qu'**on produit à chaque fois à partir d'un signal acoustique des données acoustiques qui sont à chaque fois une mesure d'une caractéristique prédéterminée (VM, WM, AM, DM) du signal acoustique et qui sont envoyées à au moins une unité de filtrage (18, 20, 28) dans laquelle
- une première fonction d'appartenance (ZF1a) indique la relation entre la mesure réelle de la caractéristique (VM) et l'appartenance à une première expression prédéterminée de la caractéristique (VM),
- au moins une autre fonction d'appartenance (ZF1b) indique la relation entre la mesure réelle de la caractéristique (VM) et l'appartenance à une deuxième expression, différente de la première expression, de la caractéristique (VM),
- pour la donnée acoustique, on détermine une première valeur de fonction (60) à partir de la première fonction d'appartenance (ZF1a) et on détermine une deuxième valeur de fonction (62) à partir de la deuxième fonction d'appartenance (ZF1b),
- à partir de ces deux valeurs de fonction (60, 62) et d'autres valeurs de fonction (64, 80, 82, 84, 110, 112, 114, 130, 132, 134) qui sont déterminées de manière analogue à partir d'autres caractéristiques, on détermine selon des règles de combinaison prédéterminées basées sur la logique floue une valeur de fiabilité (ZM) qui indique avec quelle probabilité un mot du vocabulaire peut être associé au signal acoustique et on n'associe un mot du vocabulaire au signal acoustique que si la valeur de fiabilité (ZM) se trouve dans une plage prédéterminée et on rejette le signal acoustique comme n'appartenant pas à un mot du vocabulaire si la valeur de fiabilité (ZM) se trouve en dehors de la plage prédéterminée.

2. Procédé selon la revendication 1, **caractérisé par le fait que** la caractéristique prédéterminée (WM) est le temps entre le début et la fin du signal acoustique.

3. Procédé selon la revendication 2, **caractérisé par le fait que**, lors de la spécification des fonctions d'appartenance (ZF2a à ZF2c), on tient compte de la durée moyenne des signaux vocaux pour au moins un mot du vocabulaire.

4. Procédé selon la revendication 3, **caractérisé par le fait qu'**on détermine des fonctions d'appartenance (ZF2a à ZF2c) pour au moins deux groupes de mots du vocabulaire,
avant la détermination de la valeur de fiabilité (ZM), on détermine le mot de vocabulaire qui appartient probablement au signal acoustique,
et, lors de la détermination de la valeur de fiabilité (ZM), on utilise les fonctions d'appartenance (ZF2a à ZF2c) du groupe auquel le mot déterminé appartient.

5. Procédé selon l'une des revendications précédentes, **caractérisé par le fait que**
pour chaque mot du vocabulaire, on détermine par une comparaison de caractéristiques entre un signal de référence respectif et le signal acoustique à traiter une valeur de similitude qui indique la concordance du signal de référence respectif avec le signal acoustique à traiter,
et la caractéristique prédéterminée (VM) est l'écart entre la répartition des valeurs de similitude déterminées et une équipartition.

6. Procédé selon la revendication 5, **caractérisé par le fait que**
lors de la spécification des fonctions d'appartenance (ZF1a à ZF1c), on détermine pour au moins un signal de référence sélectionné ou un signal acoustique similaire à celui-ci les valeurs de similitude pour tous les mots de la base de données, le signal de référence sélectionné étant utilisé à la place du signal à traiter,
et lors de la spécification de la fonction d'appartenance (ZF1a à ZF1c), on détermine l'écart entre la répartition des valeurs de similitude déterminées avec le signal de référence sélectionné et une équipartition.

7. Procédé selon la revendication 5 ou 6, **caractérisé par le fait que**
on détermine l'écart entre la répartition des valeurs de similitude et une équipartition au moyen d'une formation de somme sur la valeur de similitude pondérée avec un facteur de pondération respectif,
et la grandeur du facteur de pondération respectif dépend de préférence du rapport entre la valeur de similitude pondérée avec ce facteur de pondération et la plus grande valeur de similitude.

8. Procédé selon l'une des revendications précédentes, **caractérisé par le fait que**
pour chaque mot de la base de données, on détermine par une comparaison de caractéristiques entre un signal de référence respectif et le signal acoustique à traiter une valeur de similitude qui indique la concordance entre le signal de référence et le signal acoustique à traiter,
et la caractéristique (AM) est la valeur de similitude qui est normée sur le temps entre le début et la fin du signal acoustique à traiter et qui indique la meilleure concordance.

9. Procédé selon la revendication 8, **caractérisé par le fait que**, lors de la spécification des fonctions d'appartenance (ZF4a à ZF4c), on tient compte au moins d'une valeur de similitude normée lors du calcul de laquelle on utilise un signal de référence ou un signal acoustique similaire à celui-ci à la place du signal acoustique à traiter.

10. Procédé selon l'une des revendications précédentes, **caractérisé par le fait que**
pour chaque mot du vocabulaire, on spécifie un modèle (200, 210) comme succession d'au moins un état (212 à 218 ; 242 à 262), de préférence un modèle dit modèle de Markov caché,
au moins un vecteur de caractéristiques de référence (H1 à o2; B1 à t2) constitué d'une ou plusieurs caractéristiques d'un signal de référence appartenant au modèle respectif est associé à l'état (212 à 218 ; 242 à 262),
un modèle commun (300) pour tous les mots de la base de données a un seul état (302) auquel au moins une grande partie des vecteurs de caractéristiques de référence (H1 à t2) est associée,
on produit une séquence de vecteurs de caractéristiques à partir du signal acoustique à traiter,
à partir de la séquence produite de vecteurs de caractéristiques, on calcule pour chaque modèle (200, 210, 300) une valeur de similitude qui est une mesure pour la concordance du signal acoustique à traiter avec un signal de référence respectif qui peut être généré avec le modèle (200, 210, 300) respectif,
et la caractéristique (DM) est une valeur de comparaison déterminée, de préférence par une formation de différence, à partir de la plus grande valeur de similitude des modèles individuels (200, 210) et de la valeur de similitude du modèle commun (300).

11. Procédé selon la revendication 10, **caractérisé par le fait que**, lors de la spécification des fonctions d'appartenance (ZF5a à ZF5b), on détermine au moins une valeur de comparaison lors du calcul de laquelle on utilise un signal de référence ou un signal acoustique similaire à celui-ci à la place du signal acoustique à traiter.

12. Procédé selon l'une des revendications précédentes, **caractérisé par le fait que**
on calcule la valeur de fiabilité (ZW) en au moins deux étapes de procédé,
dans un premier sous-procédé de la première étape de procédé, on détermine au moins une première valeur intermédiaire à partir des valeurs de fonction pour au moins deux caractéristiques (VM, WM) du signal acoustique selon des premières règles de combinaison prédéterminées,
dans au moins un autre sous-procédé de la première étape de procédé, on détermine au moins une autre valeur intermédiaire à partir des valeurs de fonction pour au moins deux autres caractéristiques (AM, DM) du signal acoustique selon d'autres règles de combinaison prédéterminées,
et, dans la deuxième étape de procédé, on produit la valeur de fiabilité (ZW) à partir de la première valeur intermédiaire et de la deuxième valeur intermédiaire selon des règles de combinaison prédéterminées.

13. Procédé selon la revendication 12, **caractérisé par le fait que**
les deux premières caractéristiques (VM, WM) conviennent pour distinguer entre signaux acoustiques pour des bruits et signaux acoustiques pour des mots du vocabulaire,
et/ou les deux autres caractéristiques (AM, DM) conviennent pour distinguer entre signaux acoustiques pour des mots qui ne sont pas contenus dans le vocabulaire et signaux acoustiques pour des mots du vocabulaire.

14. Installation de traitement de signaux acoustiques, notamment pour la mise en oeuvre du procédé selon l'une des revendications précédentes,
qui forme et exploite des vecteurs de caractéristiques à partir des signaux acoustiques, au moins un mot du vocabulaire étant associé à chaque signal acoustique à exploiter, et avec laquelle les signaux acoustiques qui ne font pas partie du vocabulaire sont rejetés,
**caractérisée par le fait que**
une unité de conversion produit à chaque fois à partir d'un signal acoustique au moins une donnée acoustique qui indique l'expression réelle d'une caractéristique prédéterminée (VM, WM, AM, DM) du signal acoustique et qui est envoyée à une unité de filtrage (18, 20, 28),
une unité de calcul (50) indiquant avec une première fonction d'appartenance (ZF1a) la relation entre la mesure réelle de la caractéristique (VM) et l'appartenance à une première expression prédéterminée de la caractéristique (VM) et indiquant avec au moins une autre fonction d'appartenance (ZF1b) la relation entre la mesure réelle de la caractéristique (VM) et l'appartenance à une deuxième expression, différente de la première, de la caractéristique (VM),
pour la donnée acoustique, une première valeur de fonction (60) étant déterminée à partir de la première fonction d'appartenance (ZF1a) et une deuxième valeur de fonction (62) étant déterminée à partir de la deuxième fonction d'appartenance (ZF1b),
à partir de ces deux valeurs de fonction (60, 62) et avec d'autres valeurs de fonction (64, 110, 112, 114, 130, 132, 134) qui sont calculées par d'autres unités de calcul (70, 100, 120) et qui sont déterminées de manière analogue à partir de cette caractéristique et d'autres caractéristiques (VM, WM, AM, DM), une valeur de fiabilité (ZM) étant déterminée selon des règles de combinaison prédéterminées basées sur la logique floue, laquelle valeur de fiabilité est évaluée par une unité d'évaluation (40) et indique avec quelle probabilité un mot du vocabulaire peut être associé au signal acoustique,
un mot du vocabulaire n'étant associé au signal acoustique que si la valeur de fiabilité (ZM) se trouve dans une plage prédéterminée, et
le signal acoustique étant rejeté comme n'appartenant pas à un mot du vocabulaire si la valeur de fiabilité (ZM) se trouve en dehors de la plage prédéterminée.

15. Installation selon la revendication 14, **caractérisée par le fait qu'**elle est utilisée dans une installation de télécommunications.
